(19) Europäisches Patentamt / European Patent Office / Office européen des brevets

(11) **EP 4 436 055 A1**

(12) **EUROPEAN PATENT APPLICATION**
published in accordance with Art. 153(4) EPC

(43) Date of publication:
**25.09.2024 Bulletin 2024/39**

(21) Application number: **22900204.3**

(22) Date of filing: **04.11.2022**

(51) International Patent Classification (IPC):
**H04B 7/04** (2017.01)   **H04W 72/12** (2023.01)

(52) Cooperative Patent Classification (CPC):
**H04B 1/7107; H04B 1/7136; H04B 7/04;**
**H04W 72/12**

(86) International application number:
**PCT/CN2022/129979**

(87) International publication number:
**WO 2023/098399 (08.06.2023 Gazette 2023/23)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **02.12.2021 CN 202111473385**

(71) Applicant: **Huawei Technologies Co., Ltd.**
**Shenzhen, Guangdong 518129 (CN)**

(72) Inventors:
- **WEI, Fan**
  **Shenzhen, Guangdong 518129 (CN)**
- **WANG, Lei**
  **Shenzhen, Guangdong 518129 (CN)**
- **XU, Xiuqiang**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **COMMUNICATION METHOD AND COMMUNICATION APPARATUS**

(57)    This application provides a communication method and a communication apparatus. The method includes: receiving indication information from a network device, where the indication information indicates a frequency domain frequency hopping sequence and a first hopping sequence, or the indication information indicates a joint hopping sequence, and the joint hopping sequence is used to determine a frequency domain frequency hopping sequence and a first hopping sequence; and the first hopping sequence includes one or more of the following: a demodulation reference signal DMRS port hopping sequence, a beam hopping sequence, and a pilot hopping sequence; and communicating with the network device based on the frequency domain frequency hopping sequence and the first hopping sequence. This application distinguishes users in a plurality of resource dimensions, to reduce interference between a plurality of users and help improve communication reliability.

FIG. 5

**Description**

This application claims priority to Chinese Patent Application No. 202111473385.X, filed with the China National Intellectual Property Administration on December 2, 2021 and entitled "COMMUNICATION METHOD AND COMMUNICATION APPARATUS", which is incorporated herein by reference in its entirety.

**TECHNICAL FIELD**

This application relates to the field of communication technologies, and in particular, to a communication method and a communication apparatus.

**BACKGROUND**

In a wireless communication system, multi-user multiplexing in resources such as a time domain resource, a frequency domain resource, and a space domain resource is an issue that needs to be taken into special consideration. Existing systems such as a long term evolution (Long Term Evolution, LTE) system and a new radio access technology (new radio access technology, NR) system allocate the resources such as the time domain resource, the frequency domain resource, and the space domain resource to users in an orthogonal multiple access manner, so that each user can exclusively occupy a frequency domain resource, a time domain resource, or a space domain resource. With continuous popularization of application such as internet of things, a quantity of access users in a wireless network increases in geometric progression. In a background in which communication resources such as spectrum resources are limited, a non-orthogonal multiple access manner needs to be considered, in other words, the plurality of users share a same resource such as a time domain resource, a frequency domain resource, or a space domain resource in a communication process. In the non-orthogonal multiple access, because the users share a same communication resource, to resolve a problem of multi-user interference (namely, multiple access interference), a hopping mechanism may be introduced to the communication system. To be specific, the user randomly selects a different frequency/frequency band during each transmission, to randomize interference between the users, thereby resolving the multiple access interference problem in the non-orthogonal multiple access. However, in a design of a hopping sequence in the hopping mechanism in a conventional technology, only a resource dimension of a frequency domain frequency/frequency band is considered. When a large quantity of users access a network, there are still a large quantity of interfering users on each frequency. Consequently, a capability of processing multiple access interference in a multi-user system is relatively limited.

**SUMMARY**

This application provides a communication method and a communication apparatus, to reduce interference between a plurality of users, and help improve communication reliability.

According to a first aspect, this application provides a communication method. The method is applicable to a terminal device. The method includes:

receiving indication information from a network device, where the indication information indicates a frequency domain frequency hopping sequence and a first hopping sequence, or the indication information indicates a joint hopping sequence, and the joint hopping sequence is used to determine a frequency domain frequency hopping sequence and a first hopping sequence; and the first hopping sequence includes one or more of the following: a demodulation reference signal DMRS port hopping sequence, a beam hopping sequence, and a pilot hopping sequence; and communicating with the network device based on the frequency domain frequency hopping sequence and the first hopping sequence.

In this application, a plurality of resource dimensions (for example, at least two resource dimensions of the frequency domain frequency hopping sequence, the DMRS port hopping sequence, the beam hopping sequence, and the pilot hopping sequence) are used to distinguish between users, to reduce interference between a plurality of users, and help improve communication reliability.

In a possible implementation, the first hopping sequence is the DMRS port hopping sequence, and a hopping sequence indicated by the indication information is determined based on at least one of the following parameters: a frequency domain frequency quantity $F$, a DMRS port quantity $P$, a hopping sequence length $T$, and a maximum quantity of collision times $d$.

In a possible implementation, the indication information indicates the joint hopping sequence; and the method further includes:

converting the joint hopping sequence into the frequency domain hopping sequence and the DMRS port hopping sequence based on the frequency domain frequency quantity *F*.

In a possible implementation, the joint hopping sequence is s = [$s_1 s_2 ... s_T$]; and the frequency domain hopping sequence $s^q = [s_1^q s_2^q ... s_T^q]$ and the DMRS port hopping sequence $s^p = [s_1^p s_2^p ... s_T^p]$ respectively meet:

$$s_t^q = mod(s_t, F);$$

and

$$s_t^p = \text{ceil}(s_t/F),$$

where $s_t^q$ represents frequency selection of the frequency domain hopping sequence at a moment t, $s_t^p$ is port selection of the DMRS port hopping sequence at the moment t, and t∈[1, T].

In a possible implementation, the indication information indicates the joint hopping sequence; and

the method further includes:
converting the joint hopping sequence into the frequency domain hopping sequence and the DMRS port hopping sequence based on the DMRS port quantity *P*.

In a possible implementation, the joint hopping sequence is s = [$s_1 s_2 ... s_T$]; and the frequency domain hopping sequence $s^q = [s_1^q s_2^q ... s_T^q]$ and the DMRS port hopping sequence $s^p = [s_1^p s_2^p ... s_T^p]$ respectively meet:

$$s_t^q = \text{ceil}(s_t/P);$$

and

$$s_t^p = mod(s_t, P),$$

where $s_t^q$ represents frequency selection of the frequency domain hopping sequence at a moment t, $s_t^p$ is port selection of the DMRS port hopping sequence at the moment t, and t∈[1, T].

In this application, the joint hopping sequence may be converted into the frequency domain hopping sequence and the DMRS port hopping sequence based on the frequency domain frequency quantity *F* or the DMRS port quantity *P*. This is highly operable, and has a plurality of implementations.

In a possible implementation, the receiving indication information from a network device includes:
receiving radio resource control RRC signaling from the network device, where the RRC signaling includes the indication information.

In a possible implementation, the indication information includes one or more of the following:

the hopping sequence, a sequence identifier corresponding to the hopping sequence, and a signature sequence corresponding to the hopping sequence, where
a frequency band granularity of the signature sequence is a resource block level or a resource element level.

According to a second aspect, this application provides a communication method. The method is applicable to a network device. The method includes:

sending indication information to a terminal device, where the indication information indicates a frequency domain frequency hopping sequence and a first hopping sequence, or the indication information indicates a joint hopping sequence, and the joint hopping sequence is used to determine a frequency domain frequency hopping sequence and a first hopping sequence; and the first hopping sequence includes one or more of the following: a demodulation reference signal DMRS port hopping sequence, a beam hopping sequence, and a pilot hopping sequence; and communicating with the terminal device based on the frequency domain frequency hopping sequence and the first hopping sequence.

In a possible implementation, the first hopping sequence is the DMRS port hopping sequence, and a hopping sequence indicated by the indication information is determined based on at least one of the following parameters: a frequency domain frequency quantity $F$, a DMRS port quantity $P$, a hopping sequence length $T$, and a maximum quantity of collision times $d$.

In a possible implementation, the frequency domain hopping sequence and the DMRS port hopping sequence are obtained through conversion based on the frequency domain frequency quantity $F$ and the joint hopping sequence.

In a possible implementation, the joint hopping sequence is $s = [s_1 s_2 \dots s_T]$; and the frequency domain hopping sequence $s^q = [s_1^q s_2^q \dots s_T^q]$ and the DMRS port hopping sequence $s^p = [s_1^p s_2^p \dots s_T^p]$ respectively meet:

$$s_t^q = mod(s_t, F);$$

and

$$s_t^p = \text{ceil}(s_t/F),$$

where $s_t^q$ represents frequency selection of the frequency domain hopping sequence at a moment t, $s_t^p$ is port selection of the DMRS port hopping sequence at the moment t, and $t \in [1, T]$.

In a possible implementation, the frequency domain hopping sequence and the DMRS port hopping sequence are obtained through conversion based on the DMRS port quantity $P$ and the joint hopping sequence.

In a possible implementation, the joint hopping sequence is $s = [s_1 s_2 \dots s_T]$; and the frequency domain hopping sequence $s^q = [s_1^q s_2^q \dots s_T^q]$ and the DMRS port hopping sequence $s^p = [s_1^p s_2^p \dots s_T^p]$ respectively meet:

$$s_t^q = \text{ceil}(s_t/P);$$

and

$$s_t^p = mod(s_t, P),$$

where $s_t^q$ represents frequency selection of the frequency domain hopping sequence at a moment t, $s_t^p$ is port selection of the DMRS port hopping sequence at the moment t, and $t \in [1, T]$.

In a possible implementation, the sending indication information to a terminal device includes:
sending radio resource control RRC signaling to the terminal device, where the RRC signaling includes the indication information.

In a possible implementation, the indication information includes one or more of the following:

the hopping sequence, a sequence identifier corresponding to the hopping sequence, and a signature sequence corresponding to the hopping sequence, where
a frequency band granularity of the signature sequence is a resource block level or a resource element level.

According to a third aspect, this application provides a communication apparatus. The apparatus may be a terminal device. The apparatus includes:

a transceiver unit, configured to receive indication information from a network device, where the indication information indicates a frequency domain frequency hopping sequence and a first hopping sequence, or the indication information indicates a joint hopping sequence, and the joint hopping sequence is used to determine a frequency domain frequency hopping sequence and a first hopping sequence; and the first hopping sequence includes one or more of the following: a demodulation reference signal DMRS port hopping sequence, a beam hopping sequence, and a pilot hopping sequence; and

a processing unit, configured to communicate with the network device by using the transceiver unit based on the frequency domain frequency hopping sequence and the first hopping sequence.

In a possible implementation, the first hopping sequence is the DMRS port hopping sequence, and a hopping sequence indicated by the indication information is determined based on at least one of the following parameters: a frequency domain frequency quantity $F$, a DMRS port quantity $P$, a hopping sequence length $T$, and a maximum quantity of collision times $d$.

In a possible implementation, the indication information indicates the joint hopping sequence, and the processing unit is further configured to:

convert the joint hopping sequence into the frequency domain hopping sequence and the DMRS port hopping sequence based on the frequency domain frequency quantity $F$.

In a possible implementation, the joint hopping sequence is s = [s$_1$s$_2$ ... s$_7$]; and the frequency domain hopping sequence $s^q = [s_1^q s_2^q ... s_T^q]$ and the DMRS port hopping sequence $s^p = [s_1^p s_2^p ... s_T^p]$ respectively meet:

$$s_t^q = mod(s_t, F);$$

and

$$s_t^p = \text{ceil}(s_t/F),$$

where $s_t^q$ represents frequency selection of the frequency domain hopping sequence at a moment t, $s_t^p$ is port selection of the DMRS port hopping sequence at the moment t, and t∈[1, T].

In a possible implementation, the indication information indicates the joint hopping sequence, and the processing unit is further configured to:

convert the joint hopping sequence into the frequency domain hopping sequence and the DMRS port hopping sequence based on the DMRS port quantity $P$.

In a possible implementation, the joint hopping sequence is s = [s$_1$s$_2$ ... s$_7$]; and the frequency domain hopping sequence $s^q = [s_1^q s_2^q ... s_T^q]$ and the DMRS port hopping sequence $s^p = [s_1^p s_2^p ... s_T^p]$ respectively meet:

$$s_t^q = \text{ceil}(s_t/P);$$

and

$$s_t^p = mod(s_t, P),$$

where $s_t^q$ represents frequency selection of the frequency domain hopping sequence at a moment t, $s_t^p$ is port selection of the DMRS port hopping sequence at the moment t, and t∈[1, T].

In a possible implementation, the transceiver unit is further configured to:

receive radio resource control RRC signaling from the network device, where the RRC signaling includes the indication information.

In a possible implementation, the indication information includes one or more of the following:

the hopping sequence, a sequence identifier corresponding to the hopping sequence, and a signature sequence corresponding to the hopping sequence, where

a frequency band granularity of the signature sequence is a resource block level or a resource element level.

According to a fourth aspect, this application provides a communication apparatus. The apparatus may be a network device. The apparatus includes:

a transceiver unit, configured to send indication information to a terminal device, where the indication information indicates a frequency domain frequency hopping sequence and a first hopping sequence, or the indication information indicates a joint hopping sequence, and the joint hopping sequence is used to determine a frequency domain frequency hopping sequence and a first hopping sequence; and the first hopping sequence includes one or more of the following: a demodulation reference signal DMRS port hopping sequence, a beam hopping sequence, and a pilot hopping sequence; and

a processing unit, configured to communicate with the terminal device by using the transceiver unit based on the frequency domain frequency hopping sequence and the first hopping sequence.

In a possible implementation, the first hopping sequence is the DMRS port hopping sequence, and a hopping sequence indicated by the indication information is determined based on at least one of the following parameters: a frequency domain frequency quantity $F$, a DMRS port quantity $P$, a hopping sequence length $T$, and a maximum quantity of collision times $d$.

In a possible implementation, the frequency domain hopping sequence and the DMRS port hopping sequence are obtained through conversion based on the frequency domain frequency quantity $F$ and the joint hopping sequence.

In a possible implementation, the joint hopping sequence is s = [s$_1$s$_2$ ... s$_T$]; and the frequency domain hopping sequence $s^q = [s_1^q s_2^q ... s_T^q]$ and the DMRS port hopping sequence $s^p = [s_1^p s_2^p ... s_T^p]$ respectively meet:

$$s_t^q = mod(s_t, F);$$

and

$$s_t^p = \text{ceil}(s_t/F),$$

where $s_t^q$ represents frequency selection of the frequency domain hopping sequence at a moment $t$, $s_t^p$ is port selection of the DMRS port hopping sequence at the moment t, and $t \in [1, T]$.

In a possible implementation, the frequency domain hopping sequence and the DMRS port hopping sequence are obtained through conversion based on the DMRS port quantity $P$ and the joint hopping sequence.

In a possible implementation, the joint hopping sequence is s = [s$_1$s$_2$ ... s$_T$]; and the frequency domain hopping sequence $s^q = [s_1^q s_2^q ... s_T^q]$ and the DMRS port hopping sequence $s^p = [s_1^p s_2^p ... s_T^p]$ respectively meet:

$$s_t^q = \text{ceil}(s_t/P);$$

and

$$s_t^p = mod(s_t, P),$$

where $s_t^q$ represents frequency selection of the frequency domain hopping sequence at a moment $t$, $s_t^p$ is port selection of the DMRS port hopping sequence at the moment t, and $t \in [1, T]$.

In a possible implementation, the transceiver unit is further configured to:

send radio resource control RRC signaling to the terminal device, where the RRC signaling includes the indication information.

In a possible implementation, the indication information includes one or more of the following:

the hopping sequence, a sequence identifier corresponding to the hopping sequence, and a signature sequence corresponding to the hopping sequence, where
a frequency band granularity of the signature sequence is a resource block level or a resource element level.

According to a fifth aspect, this application provides a communication apparatus. The apparatus may be a terminal device, an apparatus in a terminal device, or an apparatus that can be used together with a terminal device. The communication apparatus may alternatively be a chip system. The communication apparatus may perform the method according to the first aspect. A function of the communication apparatus may be implemented by hardware, or may be implemented by hardware executing corresponding software. The hardware or the software includes one or more units or modules corresponding to the foregoing function. The unit or module may be software and/or hardware. For operations performed by the communication apparatus and beneficial effect, refer to the method and the beneficial effect in the foregoing first aspect. Repeated parts are not described again.

According to a sixth aspect, this application provides a communication apparatus. The apparatus may be a network device, an apparatus in a network device, or an apparatus that can be used together with a network device. The communication apparatus may alternatively be a chip system. The communication apparatus may perform the method according to the second aspect. A function of the communication apparatus may be implemented by hardware, or may be implemented by hardware executing corresponding software. The hardware or the software includes one or more units or modules corresponding to the foregoing function. The unit or module may be software and/or hardware. For operations performed by the communication apparatus and beneficial effect, refer to the method and the beneficial effect in the foregoing second aspect. Repeated parts are not described again.

According to a seventh aspect, this application provides a communication apparatus. The apparatus may be a terminal device. The communication apparatus includes a processor and a transceiver, and the processor and the transceiver are configured to execute a computer program or instructions stored in at least one memory, to enable the apparatus to implement the method according to any one of the first aspect.

According to an eighth aspect, this application provides a communication apparatus. The apparatus may be a terminal device. The communication apparatus includes a processor, a transceiver, and a memory. The processor, the transceiver, and the memory are coupled, and the processor and the transceiver are configured to implement the method according to any one of the first aspect.

According to a ninth aspect, this application provides a communication apparatus. The apparatus may be a network device. The communication apparatus includes a processor and a transceiver, and the processor and the transceiver are configured to execute a computer program or instructions stored in at least one memory, to enable the apparatus to implement the method according to any one of the second aspect.

According to a tenth aspect, this application provides a communication apparatus. The apparatus may be a network device. The communication apparatus includes a processor, a transceiver, and a memory. The processor, the transceiver, and the memory are coupled; and the processor and the transceiver are configured to implement the method according to any one of the second aspect.

According to a ninth aspect, this application provides a computer-readable storage medium. The storage medium stores a computer program or instructions, and when the computer program or the instructions are executed by a computer, the method according to any one of the first aspect or the second aspect is implemented.

According to a tenth aspect, this application provides a computer program product including instructions. The computer program product includes computer program code, and when the computer program code is run on a computer, the method according to any one of the first aspect or the second aspect is implemented.

## BRIEF DESCRIPTION OF DRAWINGS

FIG. 1 is a schematic diagram of a network architecture of a communication system according to an embodiment of this application;
FIG. 2 is a schematic diagram of another network architecture of the communication system according to an embodiment of this application;
FIG. 3 is a schematic diagram of a DMRS type 1;
FIG. 4 is a schematic diagram of a DMRS type 2;
FIG. 5 is a schematic flowchart of a communication method according to an embodiment of this application;
FIG. 6 is a schematic diagram of a scenario of a beam hopping sequence according to an embodiment of this application;

FIG. 7 is a schematic diagram of a scenario of a pilot hopping sequence according to an embodiment of this application;

FIG. 8 is a schematic diagram of a simulation result of a case 1 in a preconfigured scenario according to an embodiment of this application;

FIG. 9 is a diagram of a simulation result of a case 2 in a preconfigured scenario according to an embodiment of this application;

FIG. 10 is a schematic diagram of a structure of a communication apparatus according to an embodiment of this application;

FIG. 11 is a schematic diagram of a structure of another communication apparatus according to an embodiment of this application;

FIG. 12 is a schematic diagram of a structure of another communication apparatus according to an embodiment of this application; and

FIG. 13 is a schematic diagram of a structure of another communication apparatus according to an embodiment of this application.

## DESCRIPTION OF EMBODIMENTS

The following clearly and completely describes the technical solutions in embodiments of this application with reference to the accompanying drawings in embodiments of this application.

In descriptions of this application, unless otherwise specified, "/" represents "or". For example, A/B may represent A or B. "And/or" in this specification describes only an association relationship between associated objects and represents that three relationships may exist. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

In this application, the term "example", "for example", or the like represents giving an example, an illustration, or a description. Any embodiment or design scheme described as an "example" or "for example" in this application should not be explained as being more preferred or more advantageous than another embodiment or design scheme. To be precise, use of the term "example", "for example", or the like is intended to present a related concept in a specific manner.

The technical solutions in embodiments of this application may be applied to various communication systems, for example, a global system for mobile communications (global system of mobile communication, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5th generation (5th generation, 5G) system or new radio (new radio, NR), and a future communication system. This is not limited herein.

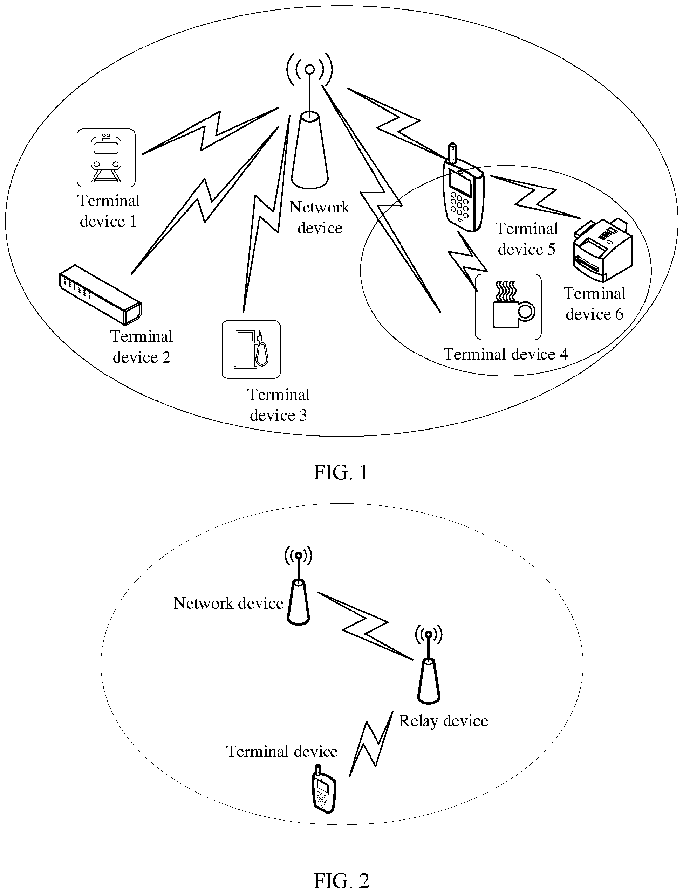

FIG. 1 is a schematic diagram of a network architecture of a communication system according to an embodiment of this application. The communication system may be a 5G communication system, or another communication system such as a 6G communication system. This is not limited in this embodiment of this application. The communication system includes a network device and a terminal device. An example in which a quantity of network devices may be one and a quantity of terminal devices may be six is used for description.

The terminal device in embodiments of this application is a device having a wireless transceiver function. The terminal device may also be referred to as a user equipment (user equipment, UE), an access terminal (access terminal), a terminal, a subscriber unit, a subscriber station, a mobile station (mobile station), a remote station (remote station), a remote terminal (remote terminal), a mobile device, a user terminal (user terminal), a wireless network device, a user agent (user agent), a user apparatus, or the like. The terminal device may be deployed on land, including an indoor or outdoor, a handheld or vehicle-mounted device; or may be deployed on water (for example, on a ship); or may be deployed in the air (for example, on an airplane, a balloon, or a satellite). The terminal device may be a cellular phone (cellular phone), a cordless phone, a session initiation protocol (session initiation protocol, SIP) phone, a smartphone, a mobile phone, a wireless local loop (wireless local loop, WLL) station, a personal digital assistant (personal digital assistant, PDA), a handheld device having a wireless communication function, a computing device or another device connected to a wireless modem, a vehicle-mounted device, a wearable device, an uncrewed aerial vehicle device or a terminal in internet of things, a terminal in internet of vehicles, a terminal in any form in a 5th generation (fifth generation, 5G) mobile communication network and a future network, a relay user equipment, a terminal in a future evolved public land mobile network (public land mobile network, PLMN), or the like. The relay user equipment may be, for example, a 5G residential gateway (residential gateway, RG). For example, the terminal device may be a virtual reality (virtual reality, VR) terminal, an augmented reality (augmented reality, AR) terminal, a wireless terminal in industrial control, a wireless terminal in self-driving, a wireless terminal in remote medical, a wireless terminal in a smart grid (smart grid), a wireless terminal in transportation safety, a wireless terminal in a smart city, a wireless terminal in a smart home, or the like. This is not limited in embodiments of this application.

The network device in embodiments of this application may include, for example, an access network (access network, AN) device and a radio access network (radio access network, RAN) device. The access network device includes but is not limited to, for example, a new generation NodeB (generation NodeB, gNB) in a 5G communication system, an evolved NodeB (evolved NodeB, eNB), a next generation evolved NodeB (next generation eNB, ng-eNB), a wireless backhaul device, a radio network controller (radio network controller, RNC), a NodeB (NodeB, NB), a base station controller (base station controller, BSC), and a base transceiver station (base transceiver station, BTS), a home evolved NodeB ((home evolved NodeB, HeNB) or (home NodeB, HNB) ), a baseband unit (baseBand unit, BBU), a transmission and reception point (transmitting and receiving point, TRP), a transmission point (transmitting point, TP), a mobile switching center, or the like. This is not limited herein. In addition, the access network device may also be a base station in a 6G communication system, an open base station (Open RAN), a cloud base station (Cloud RAN), or the like. This is not limited herein.

As shown in FIG. 1, a communication system includes a network device and a terminal device 1 to a terminal device 6. In the communication system, the terminal device 1 to the terminal device 6 may send uplink information to the network device, and the network device may also send downlink information to the terminal device 1 to the terminal device 6. In addition, the terminal device 4 to the terminal device 6 may also form a communication system. In the communication system, the network device may send downlink information to the terminal device 1, the terminal device 2, the terminal device 5, and the like. The terminal device 5 may also send downlink information to the terminal device 4 and the terminal device 6 The terminal device 4 and the terminal device 6 may also send uplink information to the network device by using the terminal device 5.

In addition, the network device and the terminal device may further form a relay system. For example, as shown in FIG. 2, in the system, data is forwarded between the network device and the terminal device by using a relay device (or referred to as a relay node). The relay device may be specifically a small cell, an integrated access and backhaul (integrated access and backhauling, IAB) node, a distributed unit (distributed unit, DU), a terminal device, a transmission and reception point (transmitter and receiver point, TRP), or the like. This is not limited in this application. It should be understood that, that the relay system shown in FIG. 2 is a single-hop (Single-hop) relay system is used as an example, to be specific, there is only one relay device between the network device and the terminal device. During specific implementation, the network device and the terminal device may further form a multi-hop (Multi-hop) relay system, to be specific, there are a plurality of relay devices between the network device and the terminal device. This is not limited in this application.

It should be understood that embodiments of this application may be applied to multi-user data transmission in a 5G NR system, and may include the following three scenarios:

(1) In a scheduled (scheduled)-based uplink data transmission scenario, the network device preconfigures a hopping pattern for each terminal in a network, and the terminal device performs activation through scheduling by the network device, and sends uplink data based on the hopping pattern preconfigured by the network device.

(2) In a preconfigured (configured)-based uplink data transmission scenario, the network device preconfigures a hopping pattern for each terminal in a network, and the terminal device performs random activation based on data arrival, and sends uplink data based on the hopping pattern preconfigured by the network device.

(3) In an uplink data transmission scenario based on random selection (random selection), the network device broadcasts an optional hopping pattern set to each terminal in a network, and the terminal device performs random activation based on data arrival, and randomly selects a hopping pattern from the hopping pattern set to send uplink data.

It should be noted that the network architecture and the service scenario described in embodiments of this application are intended to describe the technical solutions in embodiments of this application more clearly, and do not constitute a limitation on the technical solutions provided in embodiments of this application. A person of ordinary skill in the art may know that, as the network architecture evolves and a new service scenario emerges, the technical solutions provided in embodiments of this application are also applicable to a similar technical problem.

To facilitate understanding of related content in embodiments of this application, the following describes some knowledge required in the solutions in this application. It should be noted that these explanations are intended to make embodiments of this application easier to understand, but should not be considered as a limitation on the protection scope claimed in this application.

1. Intra-slot frequency hopping (Intra-slot frequency hopping) and inter-slot frequency hopping (Inter-slot frequency hopping)

In the 3rd Generation Partnership Project (3rd generation partnership project, 3GPP) technical specification (technical specification, TS) 38.214 protocol, a hopping pattern design solution is provided. The solution supports the following two hopping modes:

(1) Intra-slot frequency hopping (Intra-slot frequency hopping) is applicable to a single-slot or multi-slot physical uplink shared channel (physical uplink shared channel, PUSCH) transmission scenario.

For intra-slot frequency hopping, a location of a start resource block (resource block, RB) in each hop may be calculated according to the following formula:

$$\mathrm{RB}_{start} = \begin{cases} \mathrm{RB}_{start} & i=0 \\ \left(\mathrm{RB}_{start} + \mathrm{RB}_{offset}\right) \bmod N_{BWP}^{size} & i=1 \end{cases}$$

i=0 and i=1 represent a first hopping moment and a second hopping moment respectively, $\mathrm{RB}_{start}$ is a start RB location of an uplink bandwidth part (bandwidth part, BWP), and may be determined through resource block configuration information of a resource allocation type 1. $\mathrm{RB}_{offset}$ represents a frequency domain offset between two hops, and $N_{BWP}^{size}$ represents a quantity of RBs occupied by a communication bandwidth.

(2) Inter-slot frequency hopping (Inter-slot frequency hopping) is applied to a multi-slot PUSCH transmission scenario.

For inter-slot frequency hopping, a start RB location of a slot $n_s^{\mu}$ can be calculated according to the following formula:

$$\mathrm{RB}_{start}\left(n_s^{\mu}\right) = \begin{cases} \mathrm{RB}_{start} & n_s^{\mu} \bmod = 0 \\ \left(\mathrm{RB}_{start} + \mathrm{RB}_{offset}\right) \bmod N_{BWP}^{size} & n_s^{\mu} \bmod = 1 \end{cases}$$

$n_s^{\mu}$ represents a number of a current slot in a radio frame, $\mathrm{RB}_{start}$ represents a start RB location of an uplink bandwidth part, $\mathrm{RB}_{offset}$ represents a frequency domain offset between two hops, $N_{BWP}^{size}$ represents a quantity of RBs occupied by a communication bandwidth, and $\mathrm{RB}_{start}\left(n_s^{\mu}\right)$ represents a start RB location of a slot $n_s^{\mu}$ .

It can be learned that, regardless of the intra-slot frequency hopping or the inter-slot frequency hopping, there are only two hopping moments in a hopping period in time domain, and there are only two optional hopping frequencies in frequency domain. When a large quantity of users access a network, there are a large quantity of interfering users on each frequency. Therefore, the existing hopping transmission solution has a limited capability of processing multiple access interference in a multi-user communication system.

2. Demodulation reference signal (demodulation reference signal, DMRS)

Existing DMRS ports are multiplexed in a frequency division multiplexing (frequency division multiplexing, FDM) and time division multiplexing (time division multiplexing, TDM) manner. In each code division multiplexing (code division multiplexing, CDM) group, a plurality of ports are divided by using an orthogonal cover code (orthogonal cover code, OCC), and CDM groups are distinguished by using an FDM manner. An existing NR protocol supports two DMRS types, and each type may include one (single-symbol DMRS) or two (multi-symbol DMRS) orthogonal frequency division multiplexing (orthogonal frequency division multiplexing, OFDM) symbols. Multiplexing and configuration manners of the two DMRS types are described as follows:

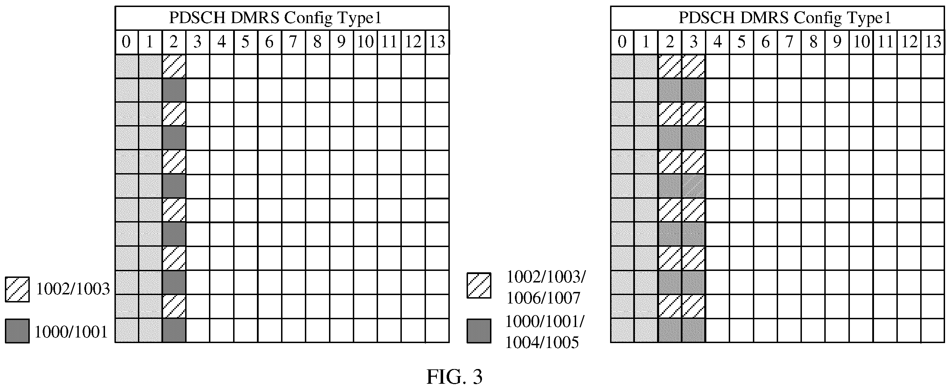

(1) For a DMRS type 1, refer to FIG. 3. FIG. 3 is a schematic diagram of a DMRS type 1. As shown in FIG. 3, for the single-symbol DMRS, subcarriers in one OFDM symbol are divided into two groups of frequency-division comb resources, and each group of comb resources forms one CDM group. The CDM group supports multiplexing of two ports through two OCCs. A maximum of four ports are supported. A time-domain OCC is added to the dual-symbol DMRS based on a single-symbol result. Each group of comb resources occupies two consecutive OFDM symbols. Each CDM group uses four OCCs in time domain and frequency domain to implement four orthogonal ports. Therefore, a maximum of eight orthogonal ports are supported.

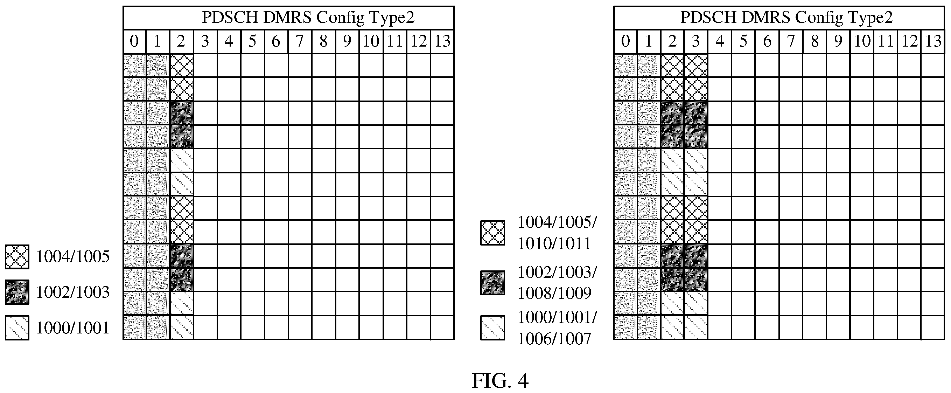

(2) For a DMRS type 2, refer to FIG. 4. FIG. 4 is a schematic diagram of a DMRS type 2. As shown in FIG. 4, for the single-symbol DMRS, subcarriers in one OFDM symbol are divided into three CDM groups, and each CDM group includes two pairs of adjacent subcarriers. Two OCCs in the CDM group support two-port multiplexing, and CDM groups are distinguished by using an FDM manner. Therefore, a maximum of six ports are supported. A time-domain orthogonal cover code (time domain OCC, TD-OCC) is added to the dual-symbol DMRS based on a single-symbol structure. Each CDM group occupies two consecutive OFDM symbols. Each CDM group supports four orthogonal ports by using four OCCs in time domain and frequency domain. Three CDM groups support a maximum of 12 ports.

It may be understood that, when different DMRS ports are configured, two users may send a same pilot sequence without causing deterioration of channel estimation performance.

For example, when different FDM groups are configured for two users, interference between pilot signals of the two users may be eliminated through frequency division. When two users are configured with a same CDM group but different OCC codes, interference between pilot signals of the two users can be eliminated through a code domain. For example, the following pilot sequence whose length is 4 is considered:

$$\phi = [1 - 1j \quad -1 + 1j -1 + 1j \quad -1 - 1j]^{\mathrm{T}}$$

For the single-symbol DMRS, when OCC codes of the two users are respectively

$wf_1 = [1\ 1\ 1\ 1]^T$ and $wf_2 = [1 - 11 - 1]^T$, the following two orthogonal pilot sequences may be constructed:

$$\phi_1 = wf_1 \circ \phi = [1 - 1j \quad -1 + 1j -1 + 1j \quad -1 - 1j]^{\mathrm{T}},$$

and

$$\phi_2 = wf_2 \circ \phi = [1 - 1j \quad 1 - 1j -1 + 1j \quad 1 + 1j]^{\mathrm{T}}$$

$\circ$ represents point multiplication between vector elements. Because $\phi_1^H \phi_2 = 0$, two orthogonal pilot sequences may be constructed by using an OCC code of a DMRS port, to implement user interference cancellation in channel estimation.

3. Hopping pattern

A hopping pattern is also referred to as a hopping sequence, and indicates frequency selection or frequency band selection at a hopping moment. If a plurality of devices (usually means a plurality of terminal devices) select a same frequency or frequency band at a same hopping moment, it is considered that a collision occurs between the plurality of devices.

It should be noted that a design of frequency hopping communication faces the following two problems:

1. For a capacity problem of a hopping pattern set, frequency band selection by a communication device at different moments forms the hopping pattern (or the hopping sequence), for example, a sequence is $s = [s_1 s_2 ... s_T]$, where $s_t \in [1, Q]$ represents frequency band (or frequency) selection of the communication device at a moment $t,$ and a quantity of optional frequencies $Q$ at each hopping moment is related to a communication bandwidth (namely, an available frequency domain resource). The hopping pattern is a subset that is $G = \{s^1 s^2 ... s^K\}$ of all $Q^T$ sequences and that meets the following constraint condition:

$$D\big(s^i, s^j\big) = \big|\{t = [1, T]\,\big|\,s_t^i = s_t^j\}\big| \leq d$$

In other words, a quantity of moments at which frequency collision occurs between any two hopping sequences in the hopping pattern set *G* is less than or equal to d. Under a condition of a limited communication bandwidth, a relatively small quantity of optional frequencies *Q* will limit the capacity of the hopping pattern set *G*. Therefore, under the condition of a limited frequency domain resource such as the bandwidth, how to design a relatively large quantity of hopping sequences is a problem needs to be considered.

2. For a collision problem of resources such as a frequency and a pilot during channel estimation, an uplink communication system including *K* users is considered, and a pilot received signal of a base station may be written as:

$$y = \sum_{k=1}^{K} h_k^q \phi_k + n$$

$h_k^q$ is a channel coefficient of the user *k* on a frequency band q, $\phi_k$ is a pilot sequence sent by the user *k, n* is white Gaussian noise, and *y* represents the pilot received signal. When $K \geq 2$, in other words, when more than two users select a same frequency, a multi-user interference problem occurs. Specifically, when a pilot sequence quantity is limited so that the two users select a same sending pilot,

$$y = h_1^q \phi_1 + h_2^q \phi_2 + n = \big(h_1^q + h_2^q\big)\phi + n$$

In this case, a channel obtained through pilot sequence estimation is a superposition of channel coefficients of the two users, causing a pilot pollution problem. Consequently, channel estimation performance at a receive end is severely deteriorated. When pilot sequences of the two users are non-orthogonal, a pilot signal of a user 2 still causes interference to channel estimation of a user 1 (and vice versa). Therefore, how to design resource allocation in frequency hopping communication to reduce a possibility of collisions of the resources such as the frequency and the pilot for the user is another problem that needs to be considered.

It should be noted that, existing systems such as an LTE system and an NR system allocate resources such as a time domain resource, a frequency domain resource, and a space domain resource to users in an orthogonal multiple access manner, so that each user can exclusively occupy a frequency domain resource, a time domain resource, or a space domain resource. With continuous popularization of application such as internet of things, a quantity of access users in a wireless network increases in geometric progression. In a background in which communication resources such as spectrum resources are limited, a non-orthogonal multiple access manner needs to be considered, in other words, the plurality of users share a same resource such as a time domain resource, a frequency domain resource, or a space domain resource in a communication process. In the non-orthogonal multiple access, because the users share a same communication resource, to resolve a problem of multi-user interference (namely, multiple access interference), a hopping mechanism may be introduced to the communication system. To be specific, the user randomly selects a different frequency/frequency band during each transmission, to randomize interference between the users, thereby resolving the multiple access interference problem in the non-orthogonal multiple access. However, in a design of a hopping sequence in the hopping mechanism in a conventional technology, only a resource dimension of a frequency domain frequency/frequency band is considered. When a large quantity of users access a network, there are still a large quantity of interfering users on each frequency. Consequently, a capability of processing multiple access interference in a multi-user system is relatively limited.

Based on this, this application provides a communication method and a communication apparatus, to distinguish users by using a plurality of resource dimensions, to improve a user multiplexing capability of a system, and help improve communication reliability.

With reference to more accompanying drawings, the following describes in detail the technical solutions provided in this application.

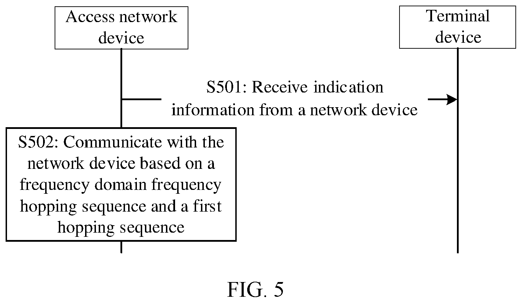

FIG. 5 is a schematic flowchart of a communication method according to an embodiment of this application. As shown in FIG. 5, the method includes the following step S501 and step S502.

S501: A terminal device receives indication information from a network device.

In some feasible implementations, the network device sends the indication information to the terminal device, and correspondingly, the terminal device receives the indication information from the network device. The indication information may indicate at least one frequency domain frequency hopping sequence and at least one first hopping sequence corresponding to the at least one frequency domain frequency hopping sequence, or the indication information may indicate at least one joint hopping sequence, to be specific, the indication information may indicate one frequency domain frequency hopping sequence and one first hopping sequence associated with the frequency domain frequency hopping sequence, or the indication information may indicate a plurality of frequency domain frequency hopping sequences and a plurality of first hopping sequences associated with the plurality of frequency domain frequency hopping sequences. Alternatively, the indication information may indicate one joint hopping sequence, or the indication information may indicate a plurality of joint hopping sequences, or the like. The joint hopping sequence may be used to determine a frequency domain frequency hopping sequence and a first hopping sequence, that is, the joint hopping sequence may be converted into the frequency domain frequency hopping sequence and the first hopping sequence.

It may be understood that when the indication information indicates the frequency domain frequency hopping sequence and the first hopping sequence, the frequency domain frequency hopping sequence and the first hopping sequence are sequence pairs having an association relationship, or in other words, the frequency domain frequency hopping sequence and the first hopping sequence corresponding to the frequency domain frequency hopping sequence are sequence pairs obtained by converting a joint hopping sequence. It may be understood that the first hopping sequence in this application includes one or more of the following communication resources: a DMRS port hopping sequence, a beam hopping sequence, a pilot hopping sequence, and the like. A beam may include a transmit beam and/or a receive beam. In other words, the beam hopping sequence may include a transmit beam hopping sequence and/or a receive beam hopping sequence. Herein, for ease of understanding, a beam hopping sequence in the following content may be understood as a transmit beam hopping sequence of the terminal device.

It should be noted that, in this embodiment of this application, the frequency domain frequency hopping sequence includes frequency selection or frequency band selection corresponding to each of a plurality of hopping moments. Correspondingly, the DMRS port hopping sequence includes DMRS port selection corresponding to each of a plurality of hopping moments, the beam hopping sequence includes beam selection corresponding to each of a plurality of hopping moments, and the pilot hopping sequence includes pilot sequence selection corresponding to each of a plurality of hopping moments.

It may be understood that the indication information in this application may be carried in radio resource control (radio resource control, RRC) signaling, to be sent to the terminal device, that is, the RRC signaling includes the indication information.

This embodiment of this application is applicable to the following three scenarios:

Scenario 1: In a scheduled (scheduled)-based uplink data transmission scenario, the network device sends the indication information to the terminal device, so that the terminal device performs activation and sends data based on scheduling of the network device. It should be noted that if a plurality of terminal devices are connected to the network device, the network device may separately send corresponding indication information to each terminal device to indicate a hopping sequence.

Scenario 2: In a pre-configured (configured)-based uplink data transmission scenario, the network device sends the indication information to the terminal device, and the terminal device performs random activation and sends data when data arrives.

Scenario 3: In an uplink data transmission scenario based on random selection (random selection), the network device broadcasts a plurality of hopping sequences to the terminal device, and the terminal device performs random activation when data arrives, and randomly selects a hopping sequence from the plurality of hopping sequences to send data.

For ease of description, for a case in which the indication information indicates the frequency domain frequency hopping sequence and the first hopping sequence, the following uses an example in which the indication information indicates one frequency domain frequency hopping sequence and one first hopping sequence corresponding to the frequency domain frequency hopping sequence for description. Correspondingly, for a case in which the indication information indicates the joint hopping sequence, the following uses an example in which the indication information indicates one joint hopping sequence for description.

For example, when the first hopping sequence is the DMRS port hopping sequence, the hopping sequence (namely, the frequency domain frequency hopping sequence and the DMRS port hopping sequence, or the joint hopping sequence) indicated by the indication information may be determined based on at least one of a frequency domain frequency quantity $F$, a DMRS port quantity $P$, a hopping sequence length $T$, a maximum quantity of collision times $d$, and the like; or in other words, the joint hopping sequence indicated by the indication information may be determined based on at least one of a total frequency quantity $Q$, a hopping sequence length $T$, a maximum quantity of collision times $d$, and the like, where the total frequency quantity $Q = F \cdot P$. For example, when the joint hopping sequence is generated in a Euclidean geometry manner, the joint hopping sequence is determined based on the total frequency quantity $Q$ and the hopping sequence length T, where the total frequency quantity $Q = F \cdot P$. For example, when the joint hopping sequence is generated in an interleaving and cyclic shift manner, the joint hopping sequence is determined based on the total frequency quantity $Q$, the hopping sequence length $T$, and the maximum quantity of collision times $d$, where the total frequency quantity $Q = F \cdot P$. A manner of constructing the joint hopping sequence in the Euclidean geometry manner or the interleaving and cyclic shift manner is described in detail below in a specific related part. The joint hopping sequence may be converted into the frequency domain frequency hopping sequence and the DMRS port hopping sequence. A specific implementation of converting the joint hopping sequence into the frequency domain frequency hopping sequence and the DMRS port hopping sequence is described in detail in the following specific related part.

For another example, when the first hopping sequence is the beam hopping sequence, the hopping sequence (namely, the frequency domain frequency hopping sequence and the beam hopping sequence, or the joint hopping sequence) indicated by the indication information may be determined based on at least one of a frequency domain frequency quantity $F$, a spatial domain beam quantity $B$, a hopping sequence length $T$, a maximum quantity of collision times $d$, and the like, where the joint hopping sequence may be converted into the frequency domain frequency hopping sequence and the beam hopping sequence; or in other words, the j oint hopping sequence indicated by the indication information may be determined based on at least one of a total frequency quantity $Q$, a hopping sequence length $T$, a maximum quantity of collision times $d$, and the like, where the total frequency quantity $Q = F \cdot B$. For example, when the joint hopping sequence is generated in a Euclidean geometry manner, the joint hopping sequence is determined based on the total frequency quantity $Q$ and the hopping sequence length $T$, where the total frequency quantity $Q = F \cdot B$. For example, when the joint hopping sequence is generated in an interleaving and cyclic shift manner, the joint hopping sequence is determined based on the total frequency quantity $Q$, the hopping sequence length $T$, and the maximum quantity of collision times $d$, where the total frequency quantity $Q = F \cdot B$.

For another example, when the first hopping sequence is the DMRS port hopping sequence, the beam hopping sequence, and the pilot hopping sequence, the hopping sequence (namely, the frequency domain frequency hopping sequence, the DMRS port hopping sequence, the beam hopping sequence, and the pilot hopping sequence, or the joint hopping sequence) indicated by the indication information may be determined based on at least one of a frequency domain frequency quantity $F$, a DMRS port quantity $P$, a spatial domain beam quantity $B$, a pilot sequence quantity $L$, a hopping sequence length $T$, a maximum quantity of collision times $d$, and the like, where the joint hopping sequence may be converted into the frequency domain frequency hopping sequence, the DMRS port hopping sequence, the beam hopping sequence, and the pilot hopping sequence; or in other words, the joint hopping sequence indicated by the indication information may be determined based on at least one of a total frequency quantity $Q$, a hopping sequence length $T$, a maximum quantity of collision times $d$, and the like, where the total frequency quantity $Q = F \cdot P \cdot B \cdot L$. For example, when the joint hopping sequence is generated in a Euclidean geometry manner, the joint hopping sequence is determined based on the total frequency quantity $Q$ and the hopping sequence length $T$, where the total frequency quantity $Q = F \cdot P \cdot B \cdot L$. For example, when the joint hopping sequence is generated in an interleaving and cyclic shift manner, the joint hopping sequence is determined based on the total frequency quantity $Q$, the hopping sequence length $T$, and the maximum quantity of collision times $d$, where the total frequency quantity $Q = F \cdot P \cdot B \cdot L$.

For ease of description, the following mainly uses an example in which the first hopping sequence is a DMRS port hopping sequence for schematic description. Correspondingly, $Q = F \cdot P$. The frequency domain frequency hopping sequence, the first hopping sequence, and the joint hopping sequence in this embodiment of this application may be collectively referred to as a hopping sequence.

It should be noted that the hopping sequence in this embodiment of this application may be generated by the network device or the terminal device based on a hopping sequence generation parameter (for example, parameters such as the frequency domain frequency quantity $F$, the DMRS port quantity $P$, the hopping sequence length $T$, and the maximum quantity of collision times $d$) and pre-stored in the 3GPP protocol. Optionally, the hopping sequence may alternatively be generated online by the network device based on a hopping sequence generation parameter, and broadcast by the network device to each terminal device in a network; and/or the hopping sequence may be generated online by the terminal device based on a hopping sequence generation parameter. This is not limited herein. It should be noted that when the terminal device generates the hopping sequence based on the hopping sequence generation parameter, the hopping sequence generation parameter may be broadcast by the network device to the terminal device.

Generally, the indication information sent by the network device to the terminal device may include one or more of the hopping sequence, a sequence identifier corresponding to the hopping sequence, a signature sequence corresponding to the frequency domain frequency hopping sequence, or the like. A sequence identifier uniquely identifies a hopping sequence, a hopping sequence pair, or a hopping sequence set. Herein, the hopping sequence may be understood as one or more of the joint hopping sequence, the frequency domain frequency hopping sequence, the DMRS port hopping sequence, or the like.

In an implementation, when the indication information indicates the frequency domain frequency hopping sequence and the DMRS port hopping sequence, the indication information may be the frequency domain frequency hopping sequence and the DMRS port hopping sequence. For example, the indication information includes a frequency domain frequency hopping sequence 1 and a DMRS port hopping sequence 1. Alternatively, the indication information may include a frequency domain frequency hopping sequence identifier corresponding to the frequency domain frequency hopping sequence and a DMRS port hopping sequence identifier corresponding to the DMRS port hopping sequence. For example, the indication information includes a frequency domain frequency hopping sequence identifier 1 and a DMRS port hopping sequence identifier 1. The frequency domain frequency hopping sequence identifier 1 uniquely identifies a frequency domain frequency hopping sequence 1, and the DMRS port hopping sequence identifier 1 uniquely identifies a DMRS port hopping sequence 1. Alternatively, the indication information may include all of the frequency domain frequency hopping sequence, the DMRS port hopping sequence, a frequency domain frequency hopping sequence identifier, a DMRS port hopping sequence identifier, and the like. This is not limited herein. For example, the indication information includes a frequency domain frequency hopping sequence 1, a DMRS port hopping sequence 1, a frequency domain frequency hopping sequence identifier 1, and a DMRS port hopping sequence identifier 1. Alternatively, the indication information may include an identifier corresponding to a sequence pair including the frequency domain frequency hopping sequence and the DMRS port hopping sequence associated with the frequency domain frequency hopping sequence. For example, the indication information includes an identifier 1, where the identifier 1 may uniquely identify a sequence pair 1, and the sequence pair 1 includes a frequency domain frequency hopping sequence 1 and a DMRS port hopping sequence 1. Alternatively, the indication information may include a DMRS port hopping sequence identifier and a signature sequence corresponding to the frequency domain frequency hopping sequence.

It should be noted that a granularity of the frequency domain frequency hopping sequence in frequency domain may be at a resource block (resource block, RB) level, or may be at a resource element (resource element, RE) level. In other words, a frequency band granularity of the signature sequence may be an RB level or an RE level. Resources of one frequency in frequency domain may be consecutive or inconsecutive (that is, one frequency may include several spaced REs or RBs). A granularity in time domain may be one or more OFDM symbols, one or more slots, or the like. This is not limited herein.

For example, it is assumed that the frequency domain frequency hopping sequence is [F2, F1, F4, F3, F1]. When the frequency band granularity in frequency domain is an RB level, the network device may indicate the following signature sequence $S_i$ to the terminal device based on the indication information:

$$S_i = \begin{bmatrix} 0\ 1\ 0\ 0\ 1 \\ 1\ 0\ 0\ 0\ 0 \\ 0\ 0\ 0\ 1\ 0 \\ 0\ 0\ 1\ 0\ 0 \end{bmatrix}$$

i represents an ith terminal device, a row in the signature sequence $S_i$ represents an RB, a column represents a hopping moment, an element of 1 represents that one or more RBs are selected at one hopping moment, and an element of 0 represents that one or more RBs are not selected at one hopping moment. $S_i$ indicates that, for an ith user equipment, frequency domain resource selected at five hopping moments are an RB 2 (namely, a frequency band F2), an RB 1 (namely, a frequency band F1), an RB 4 (namely, a frequency band F4), an RB 3 (namely, a frequency band F3), and an RB 1 (namely, a frequency band F1) respectively.

For another example, when the frequency band granularity in frequency domain is an RE level, the network device may indicate the following signature sequence $S_i'$ to the terminal device based on the indication information:

$$S_i' = \begin{bmatrix} 0\ 1\ 0\ 0\ 1 \\ 0\ 1\ 0\ 0\ 1 \\ 0\ 1\ 0\ 0\ 1 \\ 1\ 0\ 0\ 0\ 0 \\ 1\ 0\ 0\ 0\ 0 \\ 1\ 0\ 0\ 0\ 0 \\ 0\ 0\ 0\ 1\ 0 \\ 0\ 0\ 0\ 1\ 0 \\ 0\ 0\ 0\ 1\ 0 \\ 0\ 0\ 1\ 0\ 0 \\ 0\ 0\ 1\ 0\ 0 \\ 0\ 0\ 1\ 0\ 0 \end{bmatrix}$$

i represents an ith terminal device, a row in the signature sequence $S_i'$ represents an RE, a column represents a hopping moment, an element of 1 represents that one or more REs are selected at one hopping moment, and an element of 0 represents that one or more REs are not selected at one hopping moment. $S_i$ indicates that for an ith user equipment, frequency domain resources selected at five hopping moments are an RE 4 to an RE 6 (namely, an RE 4 to an RE 6 in a frequency band F2), an RE 1 to an RE 3 (namely, a frequency band F1), an RE 10 to an RE 12 (namely, a frequency band F4), an RE 7 to an RE 9 (namely, a frequency band F3), and an RE 1 to an RE 3 (namely, a frequency band F1) respectively.

It may be understood that the signature sequence may be a sparse sequence. The non-zero element 1 indicates selection of one or more (that is, the element 1 may correspond to one or more RBs) consecutive or inconsecutive resources (that is, the resources may be consecutive or inconsecutive in frequency domain, and when the resources are inconsecutive in frequency domain, 1 in each column in $S_i'$ may be inconsecutive) by the terminal device in frequency domain.

In an implementation, when the indication information indicates the joint hopping sequence, the indication information may be the joint hopping sequence. For example, the indication information includes a joint hopping sequence 1. Alternatively, the indication information may include a joint hopping sequence identifier corresponding to the joint hopping sequence. For example, the indication information includes a joint hopping sequence identifier 1, where the joint hopping sequence identifier 1 uniquely identifies a joint hopping sequence 1. Alternatively, the indication information may include both the joint hopping sequence, a joint hopping sequence identifier, and the like. This is not limited herein. For example, the indication information includes a joint hopping sequence 1 and a joint hopping sequence identifier 1.

It should be noted that the joint hopping sequence in this application may be generated in the Euclidean geometry (Euclidean Geometry, EG) manner, the interleaving and cyclic shift manner, or another possible hopping sequence construction manner.

1. The following describes an implementation of generating the joint hopping sequence based on Euclidean geometry.

For example, when the joint hopping sequence is generated in the Euclidean geometry manner, the network device may obtain a first parameter m and a second parameter s, and then generate $K$ joint hopping sequences based on the first parameter m and the second parameter s, where $K = 2^{ms}$.

In an implementation, the network device may send the generated $K$ joint hopping sequences to the terminal device.

It should be noted that, when obtaining the first parameter m and the second parameter s, the network device may select an appropriate first parameter m and an appropriate second parameter s based on a total frequency quantity $Q$ (for example, $Q = F \cdot P$), a total joint hopping sequence quantity $K$, and/or a maximum quantity of hopping times $T_{max}$. For example, the appropriate first parameter m and the appropriate second parameter s may be determined based on a total frequency quantity $Q = 2^{(m-1)s}$, a total joint hopping sequence quantity $K = 2^{ms}$, and/or a maximum quantity of hopping times $T_{max} = (2^{ms} - 1)/(2^s - 1)$. Usually, values of the appropriate first parameter m and the appropriate second parameter s may enable the total frequency quantity $Q$, the total joint hopping sequence quantity $K$, and the maximum quantity of hopping times $T_{max}$ to meet an expected requirement. In other words, three parameters $Q$, $K$, and $T_{max}$ need to be considered for selection of the appropriate m and the appropriate s, so that the three parameters are all in an appropriate range.

For example, it is assumed that a frequency domain frequency quantity $F = 2$ and a DMRS port quantity $P = 4$. Therefore, it may be determined that $Q=8$. According to the total frequency quantity $Q = 2^{(m-1)s}$, it may be determined that m=2 and s=3.

For another example, it is assumed that a frequency domain frequency quantity $F = 2$ and a DMRS port quantity $P = 2$. Therefore, it may be determined that $Q=4$. According to the total frequency quantity $Q = 2^{(m-1)s}$, it may be determined that m=2 and s=2.

For another example, it is assumed that the total joint hopping sequence quantity $K = 64$. According to $K = 2^{ms}$, it may be determined that m=2 and s=3.

For another example, it is assumed that the total joint hopping sequence quantity $K = 16$. According to $K = 2^{ms}$, it may be determined that m=2 and s=2 or m=1 and s=4. The network device may select m=2 and s=2 as values of the first parameter and the second parameter respectively. It may also be ensured that the total joint hopping sequence quantity $K=16$ when m=1 and s=4 are selected, but the total frequency quantity $Q=1$. This is not applicable to a frequency hopping system.

It should be noted that, for ease of understanding, the following uses as an example in which the total frequency quantity $Q = 4$, $K = 16$, $T_{max} = 5$, m=2, and s=2 for schematic description.

When the network device generates the $K$ joint hopping sequences based on the first parameter m and the second parameter s, the following steps are included:

S1: The network device may determine, based on the first parameter m and the second parameter s, a primitive polynomial corresponding to the first parameter m and the second parameter s. The primitive polynomial may be used to generate a joint hopping sequence identifier in a first representation form and a joint hopping sequence identifier in a second representation form. Specifically, the primitive polynomial is used to generate a first representation form and a second representation form of each joint hopping sequence identifier. For example, Table 1 shows first representation forms and second representation forms corresponding to 16 joint hopping sequence identifiers.

**Table 1**

| Joint hopping sequence identifier | First representation form | Second representation form |
|---|---|---|
| 1 | 0 | (0000) |
| 2 | 1 | (1000) |
| 3 | a | (0100) |
| 4 | $a^2$ | (0010) |
| 5 | $a^3$ | (0001) |
| 6 | $a^4$ | (1100) |
| 7 | $a^5$ | (0110) |
| 8 | $a^6$ | (0011) |
| 9 | $a^7$ | (1101) |
| 10 | $a^8$ | (1010) |
| 11 | $a^9$ | (0101) |
| 12 | $a^{10}$ | (1110) |
| 13 | $a^{11}$ | (0111) |
| 14 | $a^{12}$ | (1111) |
| 15 | $a^{13}$ | (1011) |
| 16 | $a^{14}$ | (1001) |

S2: The network device determines, based on the first representation form, a plurality of joint hopping sequence identifiers that correspond to a plurality of joint hopping sequences and that are mapped to a first frequency at a hopping moment $t$. For example, for the hopping moment t, where $t \in [1, T_{max}]$, the network device determines a non-zero initial point $p_t = \alpha^{t-1}$, and calculates, according to Formula (1), $2^s$ joint sequence identifiers that correspond to $2^s$ joint hopping sequences and that are mapped to the first frequency at the hopping moment $t$:

$$k \cdot p_t \quad (1)$$

$k \in GF(2^s) = \{0, 1, \beta, ..., \beta^{2s-2}\}$, and $\beta = \alpha^{\frac{2^{ms}-1}{2^s-1}}$ . It may be understood that, in the Euclidean geometry manner, the joint hopping sequence is mainly generated based on $GF(2^s)$, where GF is a Galois field (galois field). It may be understood that, a generation process of generating the joint hopping sequence based on a Galois field of another prime number power (namely, $GF(p^s)$, where p is a prime number) is similar to the foregoing process of generating the joint hopping sequence based on $GF(2^s)$. Details are not described herein again.

That the total frequency quantity $Q = 4$, the total joint hopping sequence quantity $K = 16$, m=2, and s=2 is used as an example. It is assumed that four frequencies are Q1, Q2, Q3, and Q4 respectively, and one frequency is selected from the four frequencies as the first frequency. Therefore, according to Formula (1), four joint hopping sequences, in the 16 joint hopping sequences, selecting the first frequency may be determined at the hopping moment t, where $t \in [1,5]$.

Herein, that the first frequency is Q3 is used as an example. It is assumed that according to Formula (1), it may be determined that at a hopping moment 1 (that is, t=1), four joint hopping sequence identifiers that correspond to four joint hopping sequences and that are mapped to Q3 are 3, 7, 10, and 15; at a hopping moment 2 (that is, t=2), four joint hopping sequence identifiers that correspond to four joint hopping sequences and that are mapped to Q3 are 2, 5, 10, and 16; at a hopping moment 3 (that is, t=3), four joint hopping sequence identifiers that correspond to four joint hopping sequences and that are mapped to Q3 are 4, 5, 11, and 15; at a hopping moment 4 (that is, t=4), four joint hopping sequence identifiers that correspond to four joint hopping sequences and that are mapped to Q3 are 1, 7, 11, and 16; and at a hopping moment 5 (that is, t=5), four joint hopping sequence identifiers that correspond to four joint hopping sequences and that are mapped to the Q3 are 3, 7, 10, and 15.

Therefore, based on a mapping relationship, it may be determined that, in the joint hopping sequences corresponding to the joint hopping sequence identifiers 3, 7, 10, and 15, a frequency corresponding to the hopping moment 1 in each joint hopping sequence is Q3; in the joint hopping sequences corresponding to the joint hopping sequence identifiers 2, 5, 10, and 16, a frequency corresponding to the hopping moment 2 in each joint hopping sequence is Q3; in the joint hopping sequence corresponding to the joint hopping sequence identifiers 4, 5, 11, and 15, a frequency corresponding to the hopping moment 3 in each joint hopping sequence is Q3; in the joint hopping sequences corresponding to the joint hopping sequence identifiers 1, 7, 11, and 16, a frequency corresponding to the hopping moment 4 in each joint hopping sequence is Q3; and in the joint hopping sequences corresponding to the joint hopping sequence identifiers 3, 7, 10, and 15, a frequency corresponding to the hopping moment 5 in each joint hopping sequence is Q3.

By analogy, the network device determines, based on the first representation form, the second representation form, and the plurality of joint hopping sequence identifiers that are mapped to the first frequency at the hopping moment *t,* a plurality of joint hopping sequence identifiers that correspond to a plurality of joint hopping sequences and that are mapped to a second frequency at the hopping moment *t,* where the second frequency is a frequency other than the first frequency in the Q frequencies. For example, for the hopping moment *t,* where $t \in [1, T_{max}]$, for each of remaining $2^{(m-1)s} - 1$ second frequencies, the network device may calculate, according to Formula (2), $2^s$ joint sequence identifiers that correspond to $2^s$ joint hopping sequences and that are mapped to each second frequency at the hopping moment *t:*

$$p_0 + k \cdot p_t \ (2)$$

$p_0 \neq 0$ and $p_t$ are linearly independent, $k \in GF(2^s) = \{0, 1, \beta, \dots, \beta^{2s-2}\}$, and $\beta = \alpha^{\frac{2^{ms}-1}{2^s-1}}$. Usually, different second frequencies correspond to different $p_0$.

That the total frequency quantity Q = 4, the total joint hopping sequence quantity K = 16, m=2, and s=2 is used as an example. The four frequencies are Q1, Q2, Q3, and Q4 respectively. It is assumed that the first frequency is Q3. Therefore, Q1, Q2, and Q4 can be used as the second frequency.

Herein, that the second frequency is Q1 is used as an example. It is assumed that according to Formula (2), it may be determined that at the hopping moment 1 (that is, t=1), four joint hopping sequence identifiers that correspond to four joint hopping sequences and that are mapped to Q1 are 1, 5, 12, and 13; at the hopping moment 2 (that is, t=2), four joint hopping sequence identifiers that correspond to four joint hopping sequences and that are mapped to Q1 are 3, 8, 11, and 13; at the hopping moment 3 (that is, t=3), four joint hopping sequence identifiers that correspond to four joint hopping sequences and that are mapped to Q1 are 2, 7, 9, and 13; at the hopping moment 4 (that is, t=4), four joint hopping sequence identifiers that correspond to four joint hopping sequences and that are mapped to Q1 are 3, 5, 9, and 14; and at the hopping moment 5 (that is, t=5), four joint hopping sequence identifiers that correspond to four joint hopping sequences and that are mapped to the Q1 are 1, 2, 3, and 4. Therefore, based on a mapping relationship, it may be determined that in the joint hopping sequences corresponding to the joint hopping sequence identifiers 1, 5, 12, and 13, a frequency corresponding to the hopping moment 1 in each joint hopping sequence is Q1; in the joint hopping sequences corresponding to the joint hopping sequence identifiers 3, 8, 11, and 13, a frequency corresponding to the hopping moment 2 in each j oint hopping sequence is Q1; in the j oint hopping sequences corresponding to the joint hopping sequence identifiers 2, 7, 9, and 13, a frequency corresponding to the hopping moment 3 in each joint hopping sequence is Q1; in the joint hopping sequences corresponding to the joint hopping sequence identifiers 3, 5, 9, and 14, a frequency corresponding to the hopping moment 4 in each joint hopping sequence is Q1; and in the joint hopping sequences corresponding to the joint hopping sequence identifiers 1, 2, 3, and 4, a frequency corresponding to the hopping moment 4 in each joint hopping sequence is Q1.

By analogy, when the second frequency is Q2, it may be determined, according to Formula (2), that in joint hopping sequences corresponding to joint hopping sequence identifiers 2, 6, 11, and 14, a frequency corresponding to the hopping moment 1 in each joint hopping sequence is Q2; in joint hopping sequences corresponding to joint hopping sequence identifiers 4, 7, 12, and 14, a frequency corresponding to the hopping moment 2 in each joint hopping sequence is Q2; in joint hopping sequences corresponding to joint hopping sequence identifiers 1, 8, 10, and 14, a frequency corresponding to the hopping moment 3 in each joint hopping sequence is Q2; in joint hopping sequences corresponding to joint hopping sequence identifiers 4, 6, 10, and 13, a frequency corresponding to the hopping moment 4 in each joint hopping sequence is Q2; and in joint hopping sequences corresponding to joint hopping sequence identifiers 5, 6, 7, and 8, a frequency corresponding to the hopping moment 4 in each joint hopping sequence is Q2.

When the second frequency is Q4, it may be determined, according to Formula (2), that in joint hopping sequences corresponding to joint hopping sequence identifiers 4, 8, 9, and 16, a frequency corresponding to the hopping moment 1 in each joint hopping sequence is Q4; in joint hopping sequences corresponding to joint hopping sequence identifiers 1, 6, 9, and 15, a frequency corresponding to the hopping moment 2 in each joint hopping sequence is Q4; in joint hopping sequences corresponding to joint hopping sequence identifiers 3, 6, 12, and 16, a frequency corresponding to the hopping moment 3 in each joint hopping sequence is Q4; in joint hopping sequences corresponding to joint hopping sequence identifiers 2, 8, 12, and 15, a frequency corresponding to the hopping moment 4 in each joint hopping sequence is Q4; and in joint hopping sequences corresponding to joint hopping sequence identifiers 13, 14, 15, and 16, a frequency corresponding to the hopping moment 4 in each joint hopping sequence is Q4.

Finally, based on the foregoing mapping relationship, frequency selection corresponding to each of five hopping moments in each of the 16 generated joint hopping sequences may be determined. For details, refer to Table 2 and Table 3. Table 2 includes frequency selection corresponding to each of the five hopping moments (namely, T1 to T5) respectively in each of eight joint hopping sequences corresponding to an identifier 1 to an identifier 8. Table 3 includes frequency selection corresponding to each of the five hopping moments (namely, T1 to T5) respectively in each of eight joint hopping sequences corresponding to an identifier 9 to an identifier 16. The identifier 1 is a joint hopping sequence identifier corresponding to a joint hopping sequence 1. The identifier 2 is a joint hopping sequence identifier corresponding to a joint hopping sequence 2. By analogy, the identifier 16 is a joint hopping sequence identifier corresponding to a joint hopping sequence 16.

It may be understood that one joint hopping sequence may be allocated to one user for frequency hopping communication. For example, the joint hopping sequence corresponding to the identifier 1 may be correspondingly allocated to a UE 1 for frequency hopping communication. The joint hopping sequence corresponding to the identifier 2 may be correspondingly allocated to a UE 2 for frequency hopping communication. By analogy, the joint hopping sequence corresponding to the identifier 16 may be correspondingly allocated to a UE 16 for frequency hopping communication.

**Table 2**

| Joint hopping sequence identifier / Hopping moment | Identifier 1 | Identifier 2 | Identifier 3 | Identifier 4 | Identifier 5 | Identifier 6 | Identifier 7 | Identifier 8 |
|---|---|---|---|---|---|---|---|---|
| T1 | Q1 | Q2 | Q3 | Q4 | Q1 | Q2 | Q3 | Q4 |
| T2 | Q4 | Q3 | Q1 | Q2 | Q3 | Q4 | Q2 | Q1 |
| T3 | Q2 | Q1 | Q4 | Q3 | Q3 | Q4 | Q1 | Q2 |
| T4 | Q3 | Q4 | Q1 | Q2 | Q1 | Q2 | Q3 | Q4 |
| T5 | Q1 | Q1 | Q1 | Q1 | Q2 | Q2 | Q2 | Q2 |

**Table 3**

| Joint hopping sequence identifier / Hopping moment | Identifier 9 | Identifier 10 | Identifier 11 | Identifier 12 | Identifier 13 | Identifier 14 | Identifier 15 | Identifier 16 |
|---|---|---|---|---|---|---|---|---|
| T1 | Q4 | Q3 | Q2 | Q1 | Q1 | Q2 | Q3 | Q4 |

| Joint hopping sequence identifier / Hopping moment | Identifier 9 | Identifier 10 | Identifier 11 | Identifier 12 | Identifier 13 | Identifier 14 | Identifier 15 | Identifier 16 |
|---|---|---|---|---|---|---|---|---|
| T2 | Q4 | Q3 | Q1 | Q2 | Q1 | Q2 | Q4 | Q3 |
| T3 | Q1 | Q2 | Q3 | Q4 | Q1 | Q2 | Q3 | Q4 |
| T4 | Q1 | Q2 | Q3 | Q4 | Q2 | Q1 | Q4 | Q3 |
| T5 | Q3 | Q3 | Q3 | Q3 | Q4 | Q4 | Q4 | Q4 |

It should be noted that, the network device may determine, based on a mapping relationship between the first frequency and the second frequency and the joint hopping sequence identifier at the hopping moment $t$ (where $t \in [1, T_{max}]$), $K$ joint hopping sequences whose sequence lengths are $T_{max}$. According to an actual requirement, the $T \in [1, T_{max}]$ hopping moments may be extracted from the joint hopping sequences to construct final $K$ joint hopping sequences. In other words, the sequence length of the joint hopping sequence constructed based on $T_{max}$ (or understood as $t \in [1, T_{max}]$) is $T_{max}$. In actual application, a hopping sequence length $T$ of a required joint hopping sequence may be less than or equal to $T_{max}$. When the hopping sequence length $T$ of the actually required joint hopping sequence is less than $T_{max}$, frequencies corresponding to T hopping moments may be extracted from the constructed joint hopping sequence whose sequence length is $T_{max}$ to construct the final joint hopping sequence. The extraction rule may be extracting frequencies corresponding to consecutive T hopping moments from the joint hopping sequence whose sequence length is $T_{max}$ as the final joint hopping sequence. Alternatively, the extraction rule may be randomly extracting frequencies corresponding to T hopping moments from the joint hopping sequence whose sequence length is $T_{max}$ as the final joint hopping sequence, where the randomly extracted frequencies corresponding to the T hopping moments may be frequencies corresponding to inconsecutive T hopping moments.

For example, it is assumed that a joint hopping sequence constructed based on $T_{max}=4$ is [Q1, Q2, Q3, Q4]. A hopping sequence length T of an actually required joint hopping sequence is 3. Therefore, three hopping moments may be extracted from the joint hopping sequence [Q1, Q2, Q3, Q4] to construct a final joint hopping sequence. For example, frequencies corresponding to three consecutive hopping moments are extracted. It is assumed that frequencies corresponding to the hopping moment 1 to the hopping moment 3 are extracted. Therefore, the three finally constructed joint hopping sequences are [Q1, Q2, Q3]. It is assumed that frequencies corresponding to the hopping moment 2 to the hopping moment 4 are extracted. Therefore, the three finally constructed joint hopping sequences are [Q2, Q3, Q4]. For another example, frequencies corresponding to the hopping moment 1, the hopping moment 3, and the hopping moment 4 are extracted, and the finally constructed joint hopping sequence is [Q1, Q3, Q4]. For another example, frequencies corresponding to the hopping moment 1, the hopping moment 2, and the hopping moment 4 are extracted, and the finally constructed joint hopping sequence is [Q1, Q2, Q4].

Optionally, with reference to Formula (1) and Formula (2), the network device may alternatively generate, for only a quantity of actually required hopping moments T, a joint hopping sequence whose sequence length is T (that is, skip an extraction operation). In a possible implementation, a value of the hopping moment t in Formula (1) and Formula (2) may be $t \in [1, T]$. In another possible implementation, a value of the hopping moment t in Formula (1) and Formula (2) may be a subset of a set $\varphi = \{1,2,3 \dots, T_{max}\}$, where a size of any subset is T. For example, it is assumed that $T_{max}$ = 4 and T=3, where the value of the hopping moment t related in Formula (1) and Formula (2) may be $t \in [1,3]$, or the value of the hopping moment t related in Formula (1) and Formula (2) may be $t \in [2,4]$, or the value of the hopping moment t related in Formula (1) and Formula (2) may be $t \in \{1,3,4\}$, or the value of the hopping moment t in Formula (1) and Formula (2) may be $t \in \{1,2,4\}$. This is not listed one by one herein.

Optionally, the K joint hopping sequences whose length is $T_{max}$ and the specified selected T hopping moments may alternatively be broadcast to the terminal device, and the terminal device extracts the T hopping moments from the hopping sequence whose length is $T_{max}$, to construct the final joint hopping sequence. For example, it is assumed that the joint hopping sequence constructed by the network device is the joint hopping sequences corresponding to the identifier 1 to the identifier 16 in Table 2, and three selected hopping moments are the hopping moment 1, the hopping moment 3, and the hopping moment 4 separately. The network device may broadcast the 16 joint hopping sequences and the hopping moment 1, the hopping moment 3, and the hopping moment 4 to the terminal device, and further, the terminal device extracts corresponding frequencies from the corresponding joint hopping sequences based on the hopping moment 1, the hopping moment 3, and the hopping moment 4, to construct the final joint hopping sequence. [Q1, Q4, Q2, Q3, Q1] is used as an example. The final joint hopping sequence constructed by extracted frequencies corresponding to the hopping moment 1, the hopping moment 3, and the hopping moment 4 is [Q1, Q2, Q3].

Optionally, the network device may alternatively indicate the first parameter m, the second parameter s, and the value of the hopping moment t to the terminal device, and the terminal device generates the final joint hopping sequence with reference to Formula (1) and Formula (2).

It should be noted that, when the joint hopping sequence is constructed based on the Euclidean geometry method, a quantity of collision times between any two joint hopping sequences in the plurality of constructed joint hopping sequences on a same frequency is at most once (that is, a maximum quantity of collision times d=1).

2. The following describes an implementation of generating the joint hopping sequence based on an interleaving and cyclic shift manner.

For example, when the joint hopping sequence is generated based on the interleaving and cyclic shift manner, a candidate sequence may be first obtained, and then a corresponding group of joint hopping sequences is generated based on each candidate sequence, where the group of joint hopping sequences may include a plurality of joint hopping sequences. It should be noted that there may be a plurality of candidate sequences, where the plurality of candidate sequences may be predefined in a protocol, and a quantity of elements having a same relative location in any two candidate sequences in the plurality of candidate sequences does not exceed a maximum quantity of collision times d, that is, is less than or equal to d. A size of d may be set according to an actual requirement. This is not limited herein. Herein, the plurality of candidate sequences may be generated in an interleaving manner. Each candidate sequence may include Q elements, the Q elements correspond to Q different frequencies, and Q is a positive integer greater than 1.

For example, it is assumed that d=2, and two candidate sequences generated in the interleaving manner are [Q1, Q6, Q5, Q4, Q3, Q2] and [Q3, Q5, Q2, Q6, Q4, Q1] respectively. It is not difficult to learn that, in the two candidate sequences, only Q3 and Q6 have a same relative location (that is, Q3 and Q6 are spaced by two locations in the two candidate sequences). Therefore, it may be determined that the quantity of elements (namely, Q3 and Q6) having the same relative location is 2, and meets a requirement that the quantity of elements (namely, Q3 and Q6) does not exceed the maximum quantity of collision times d.

For ease of understanding, the following mainly uses an example in which a group of joint hopping sequences is generated based on one candidate sequence for schematic description, where the candidate sequence may be described as a first sequence.

Specifically, the first sequence is first obtained, where the first sequence includes the Q elements, the Q elements correspond to the Q different frequencies, and Q is a positive integer greater than 1. Then, a first element in the first sequence is determined. The first element may be any element in the first sequence. Therefore, the first element may have Q options. Finally, based on the first element, the joint hopping sequence is generated. It can be understood that, in the joint hopping sequence generated based on the first element, a frequency corresponding to the first element is a frequency corresponding to a first hopping moment in the joint hopping sequence. A frequency corresponding to an $i^{th}$ hopping moment in the joint hopping sequence is a frequency corresponding to an element that is obtained by, starting from the first element, cyclically shifting to the left (or to the right) for i-1 times according to a set rule. i is a positive integer from 2 to Q, and Q is a positive integer greater than or equal to 2.

For example, the obtained first sequence is [Q1, Q6, Q5, Q4, Q3, Q2]. For details, refer to Table 4. It is assumed that the first element is Q1 in the first sequence, and a joint hopping sequence [Q1, Q6, Q5, Q4, Q3, Q2] may be correspondingly generated based on a right cyclic shift manner. A joint hopping sequence identifier corresponding to the joint hopping sequence may be an identifier 1. Alternatively, it is assumed that the first element is Q2 in the first sequence, and a joint hopping sequence [Q2, Q1, Q6, Q5, Q4, Q3] may be correspondingly generated based on a right cyclic shift manner. A joint hopping sequence identifier corresponding to the joint hopping sequence may be an identifier 2. Alternatively, it is assumed that the first element is Q3 in the first sequence, and a joint hopping sequence [Q3, Q2, Q1, Q6, Q5, Q4] may be correspondingly generated based on a right cyclic shift manner. A joint hopping sequence identifier corresponding to the joint hopping sequence may be an identifier 3. Alternatively, it is assumed that the first element is Q4 in the first sequence, and a joint hopping sequence [Q4, Q3, Q2, Q1, Q6, Q5] may be correspondingly generated based on a right cyclic shift manner. A joint hopping sequence identifier corresponding to the joint hopping sequence may be an identifier 4. Alternatively, it is assumed that the first element is Q5 in the first sequence, and a joint hopping sequence [Q5, Q4, Q3, Q2, Q1, Q6] may be correspondingly generated based on a right cyclic shift manner. A joint hopping sequence identifier corresponding to the joint hopping sequence may be an identifier 5. Alternatively, it is assumed that the first element is Q6 in the first sequence, and a joint hopping sequence [Q6, Q5, Q4, Q3, Q2, Q1] may be correspondingly generated based on a right cyclic shift manner. A joint hopping sequence identifier corresponding to the joint hopping sequence may be an identifier 6.

It may be understood that, in actual implementation, one terminal device may perform frequency hopping communication based on one joint hopping sequence. One joint hopping sequence may be allocated to one terminal device, or a plurality of joint hopping sequences may be allocated to one terminal device, so that the terminal device selects one joint hopping sequence from the plurality of allocated joint hopping sequences for the hopping sequence. For example, the UE 1 may perform frequency hopping communication based on the joint hopping sequence corresponding to the identifier 1. The UE 2 may perform frequency hopping communication based on the joint hopping sequence corresponding to the identifier 2. A UE 3 may perform frequency hopping communication based on the joint hopping sequence corresponding to the identifier 3. A UE 4 may perform frequency hopping communication based on the joint hopping sequence corresponding to the identifier 4. A UE 5 may perform frequency hopping communication based on the joint hopping sequence corresponding to the identifier 5. A UE 6 may perform frequency hopping communication based on the joint hopping sequence corresponding to the identifier 6.

**Table 4**

| Joint hopping sequence identifier / Hopping moment | Identifier 1 | Identifier 2 | Identifier 3 | Identifier 4 | Identifier 5 | Identifier 6 |
|---|---|---|---|---|---|---|
| T1 | Q1 | Q2 | Q3 | Q4 | Q5 | Q6 |
| T2 | Q6 | Q1 | Q2 | Q3 | Q4 | Q5 |
| T3 | Q5 | Q6 | Q1 | Q2 | Q3 | Q4 |
| T4 | Q4 | Q5 | Q6 | Q1 | Q2 | Q3 |
| T5 | Q3 | Q4 | Q5 | Q6 | Q1 | Q2 |
| T6 | Q2 | Q3 | Q4 | Q5 | Q6 | Q1 |

For another example, the obtained first sequence is [Q3, Q5, Q2, Q6, Q4, Q1]. For details, refer to Table 5. It is assumed that the first element is Q3 in the first sequence, and a joint hopping sequence [Q3, Q5, Q2, Q6, Q4, Q1] may be correspondingly generated based on a right cyclic shift manner. A joint hopping sequence identifier corresponding to the joint hopping sequence may be an identifier 7. Alternatively, it is assumed that the first element is Q1 in the first sequence, and a joint hopping sequence [Q1, Q3, Q5, Q2, Q6, Q4] may be correspondingly generated based on a right cyclic shift manner. A joint hopping sequence identifier corresponding to the joint hopping sequence may be an identifier 8. Alternatively, it is assumed that the first element is Q4 in the first sequence, and a joint hopping sequence [Q4, Q1, Q3, Q5, Q2, Q6] may be correspondingly generated based on a right cyclic shift manner. A joint hopping sequence identifier corresponding to the joint hopping sequence may be an identifier 9. Alternatively, it is assumed that the first element is Q6 in the first sequence, and a joint hopping sequence [Q6, Q4, Q1, Q3, Q5, Q2] may be correspondingly generated based on a right cyclic shift manner. A joint hopping sequence identifier corresponding to the joint hopping sequence may be an identifier 10. Alternatively, it is assumed that the first element is Q2 in the first sequence, and a joint hopping sequence [Q2, Q6, Q4, Q1, Q3, Q5] may be correspondingly generated based on a right cyclic shift manner. A joint hopping sequence identifier corresponding to the joint hopping sequence may be an identifier 11. Alternatively, it is assumed that the first element is Q5 in the first sequence, and a joint hopping sequence [Q5, Q2, Q6, Q4, Q1, Q3] may be correspondingly generated based on a right cyclic shift manner. A joint hopping sequence identifier corresponding to the joint hopping sequence may be an identifier 12.

It may be understood that, in actual implementation, one terminal device may perform frequency hopping communication based on one joint hopping sequence. One joint hopping sequence may be allocated to one terminal device, or a plurality of joint hopping sequences may be allocated to one terminal device, so that the terminal device selects one joint hopping sequence from the plurality of allocated joint hopping sequences for the hopping sequence. For example, a UE 7 may perform frequency hopping communication based on the joint hopping sequence corresponding to the identifier 7. A UE 8 may perform frequency hopping communication based on the joint hopping sequence corresponding to the identifier 8. A UE 9 may perform frequency hopping communication based on the joint hopping sequence corresponding to the identifier 9. A UE 10 may perform frequency hopping communication based on the joint hopping sequence corresponding to the identifier 10. A UE 11 may perform frequency hopping communication based on the joint hopping sequence corresponding to the identifier 11. A UE 12 may perform frequency hopping communication based on the joint hopping sequence corresponding to the identifier 12.

**Table 5**

| Joint hopping sequence identifier / Hopping moment | Identifier 7 | Identifier 8 | Identifier 9 | Identifier 10 | Identifier 11 | Identifier 12 |
|---|---|---|---|---|---|---|
| T1 | Q3 | Q1 | Q4 | Q6 | Q2 | Q5 |
| T2 | Q5 | Q3 | Q1 | Q4 | Q6 | Q2 |
| T3 | Q2 | Q5 | Q3 | Q1 | Q4 | Q6 |
| T4 | Q6 | Q2 | Q5 | Q3 | Q1 | Q4 |
| T5 | Q4 | Q6 | Q2 | Q5 | Q3 | Q1 |
| T6 | Q1 | Q4 | Q6 | Q2 | Q5 | Q3 |

It should be noted that a plurality of joint hopping sequences included in a group of joint hopping sequences constructed based on a same first sequence are completely orthogonal, that is, no frequency collision occurs in the joint hopping sequences in the group. For example, in Table 4, six orthogonal joint hopping sequences may be generated based on the first sequence [Q1, Q6, Q5, Q4, Q3, Q2], and may be correspondingly allocated to the UE 1 to the UE 6. Therefore, the UE 1 to the UE 6 may be understood as a user group 1. For another example, in Table 5, six orthogonal joint hopping sequences may alternatively be generated based on the first sequence [Q3, Q5, Q2, Q6, Q4, Q1], and may be correspondingly allocated to the UE 7 to the UE 12. Therefore, the UE 7 to the UE 12 may be understood as a user group 2. In other words, one group of joint hopping sequences generated based on one candidate sequence may be correspondingly allocated to one terminal device group.

An intra-group joint hopping sequence is orthogonal, and an inter-group joint hopping sequence collides at most twice. For example, the joint hopping sequence corresponding to the identifier 6 in Table 4 collides twice with the joint hopping sequence corresponding to the identifier 10 in Table 5 at the hopping moment 1 (namely, T1) and the hopping moment 4 (namely, T4), that is, collides at a frequency F6 and a frequency F3. For another example, the joint hopping sequence corresponding to the identifier 4 in Table 4 collides twice with the joint hopping sequence corresponding to the identifier 8 in Table 5 at the hopping moment 2 (namely, T2) and the hopping moment 5 (namely, T5), that is, collides at the frequency F6 and the frequency F3.

It should be noted that in a possible implementation, when the indication information indicates the frequency domain frequency hopping sequence and the DMRS port hopping sequence, for the network device, ① if the network device may directly obtain the frequency domain frequency hopping sequence and the DMRS port hopping sequence from the 3GPP protocol, the indication information sent by the network device may include the obtained frequency domain frequency hopping sequence and the DMRS port hopping sequence; and/or the indication information may include the frequency domain frequency hopping sequence identifier and the DMRS port hopping sequence identifier; and/or the indication information may include the identifier of the sequence pair including the frequency domain frequency hopping sequence and the DMRS port hopping sequence; and/or the indication information may include the signature sequence corresponding to the frequency domain frequency hopping sequence, the DMRS port hopping sequence (or the DMRS port hopping sequence identifier), and/or the like. This is not limited herein. ② If the network device may directly obtain the joint hopping sequence from the 3GPP protocol, or the network device may generate the joint hopping sequence based on each parameter, the network device may first convert the joint hopping sequence into the frequency domain frequency hopping sequence and the DMRS port hopping sequence, and then send, through indication information, the frequency domain frequency hopping sequence and the DMRS port hopping sequence obtained through conversion to the terminal device. For content included in the indication information, refer to content included in the indication information described in the foregoing case ①. Details are not described herein again. Correspondingly, the terminal device receives the indication information from the network device. Therefore, the terminal device may determine, based on the indication information, the frequency domain frequency hopping sequence and the DMRS port hopping sequence that are allocated by the network device to the terminal device.

In a possible implementation, when the indication information indicates the joint hopping sequence, for the network device, if the network device may directly obtain the joint hopping sequence from the 3GPP protocol, or the network device may generate the joint hopping sequence based on each parameter, the indication information sent by the network device may include the joint hopping sequence, the joint hopping sequence identifier, and/or the like. This is not limited herein. Correspondingly, the terminal device receives the indication information from the network device. Therefore, the terminal device may determine, based on the indication information, the joint hopping sequence allocated by the network device to the terminal device. Further, the terminal device may convert the determined joint hopping sequence into the frequency domain frequency hopping sequence and the DMRS port hopping sequence.

It should be noted that, there are the following two conversion manners for converting the joint hopping sequence into the frequency domain frequency hopping sequence and the DMRS port hopping sequence.

Conversion manner 1: The joint hopping sequence is converted into the frequency domain hopping sequence and the DMRS port hopping sequence based on a frequency domain frequency quantity $F$. Specifically, it is assumed that the joint hopping sequence is s = $[s_1 s_2 \ldots s_T]$, where $s_t \in [1, Q]$ and $Q = F \cdot P$. The frequency domain hopping sequence $s^q = [s_1^q s_2^q \ldots s_T^q]$ and the DMRS port hopping sequence $s^p = [s_1^p s_2^p \ldots s_T^p]$ respectively meet:

$$s_t^q = mod(s_t, F);$$

and

$$s_t^p = \text{ceil}(s_t/F)$$

$s_t^q$ represents frequency selection of the frequency domain hopping sequence at a moment t, $s_t^p$ is port selection of the DMRS port hopping sequence at the moment t, and $t \in [1, T]$.

Conversion manner 2: The joint hopping sequence is converted into the frequency domain hopping sequence and the DMRS port hopping sequence based on a DMRS port quantity $P$. Specifically, it is assumed that the joint hopping sequence is s = $[s_1 s_2 \ldots s_T]$, where $s_t \in [1, Q]$ and $Q = F \cdot P$. The frequency domain hopping sequence $s^q = [s_1^q s_2^q \ldots s_T^q]$ and the DMRS port hopping sequence $s^p = [s_1^p s_2^p \ldots s_T^p]$ respectively meet:

$$s_t^q = \text{ceil}(s_t/P);$$

and

$$s_t^p = mod(s_t, P)$$

$s_t^q$ represents frequency selection of the frequency domain hopping sequence at a moment t, $s_t^p$ is port selection of the DMRS port hopping sequence at the moment t, and $t \in [1, T]$.

ceil($\cdot$) represents a rounding up function, and mod($\cdot$) represents a modulo function.

For example, Table 6 shows a result of converting the joint hopping sequence into the frequency domain frequency hopping sequence and the DMRS port hopping sequence after the joint hopping sequence is generated based on the Euclidean geometry manner. It can be seen from Table 6 that, for the UE 1 and the UE 2, because a frequency collision occurs only at a first hopping moment in joint hopping sequences of two users, a frequency domain frequency completely collides with a DMRS port only at the moment 1. At another hopping moment, the two users may be distinguished by using one or two resource dimensions of the frequency domain frequency or the DMRS port. Based on this, even if the two users send a same pilot sequence, channel estimation performance is not severely deteriorated.

**Table 6**

| | Slot 1 | | Slot 2 | | Slot 3 | | Slot 4 | | Slot 5 | |
|---|---|---|---|---|---|---|---|---|---|---|
| Joint hopping sequence of a UE 1 | $s_1 = 3$ | | $s_2 = 24$ | | $s_3 = 30$ | | $s_4 = 17$ | | $s_5 = 15$ | |
| Joint hopping sequence of a UE 2 | $s_1 = 3$ | | $s_2 = 27$ | | $s_3 = 12$ | | $s_4 = 32$ | | $s_5 = 19$ | |
| Frequency-port of the UE 1 | $s_1^q = 3$ | $s_1^p = 1$ | $s_2^q = 6$ | $s_2^p = 1$ | $s_3^q = 7$ | $s_3^p = 3$ | $s_4^q = 4$ | $s_4^p = 2$ | $s_5^q = 4$ | $s_5^p = 2$ |
| Frequency-port of the UE 2 | $s_1^q = 3$ | $s_1^p = 1$ | $s_2^q = 6$ | $s_2^p = 4$ | $s_3^q = 3$ | $s_3^p = 1$ | $s_4^q = 8$ | $s_4^p = 1$ | $s_5^q = 4$ | $s_5^p = 4$ |

S502: The terminal device communicates with the network device based on the frequency domain frequency hopping sequence and the first hopping sequence.

In some feasible implementations, the terminal device may communicate with the network device based on the frequency domain frequency hopping sequence and the first hopping sequence. Correspondingly, the network device communicates with the terminal device based on the frequency domain frequency hopping sequence and the first hopping sequence. For example, the first hopping sequence is the DMRS port hopping sequence. At the hopping moment 1, the terminal device may communicate with the network device by using a frequency 1 or a frequency band 1 corresponding to the hopping moment 1 in the frequency domain frequency hopping sequence and a DMRS port 1 corresponding to the hopping moment 1 in the DMRS port hopping sequence. For another example, the first hopping sequence is the DMRS port hopping sequence, the beam hopping sequence, and the pilot hopping sequence. At the hopping moment 1, the terminal device may communicate with the network device by using a frequency 1 or a frequency band 1 corresponding to the hopping moment 1 in the frequency domain frequency hopping sequence, a DMRS port 1 corresponding to the hopping moment 1 in the DMRS port hopping sequence, a beam 1 corresponding to the hopping moment 1 in the beam hopping sequence, and a pilot sequence 1 corresponding to the hopping moment 1 in the pilot hopping sequence. Herein, communication may be understood as uplink sending of the terminal device and/or downlink sending of the network device. This is not limited herein.

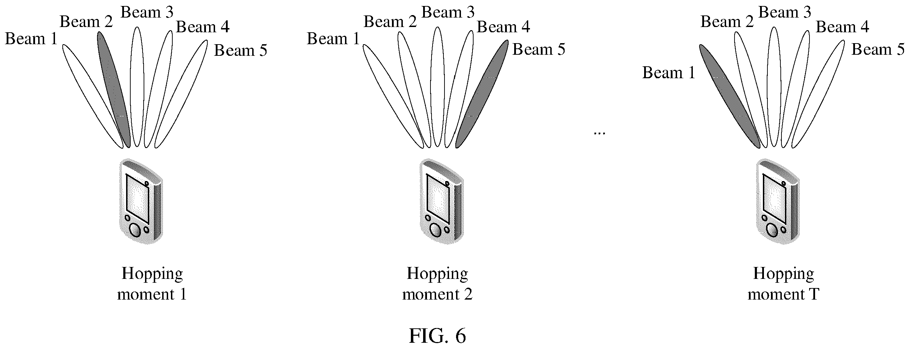

FIG. 6 is a schematic diagram of a scenario of a beam hopping sequence according to an embodiment of this application. As shown in FIG. 6, a spatial domain beam quantity B is 5, and five beams are a beam 1, a beam 2, a beam 3, a beam 4, and a beam 5 respectively in FIG. 6. It is assumed that the beam is a transmit beam. As shown in FIG. 6, at the hopping moment 1, the terminal device may use the beam 2 for uplink sending; at the hopping moment 2, the terminal device may use the beam 5 for uplink sending; ...; and at a hopping moment T, the terminal device may use the beam 1 for uplink sending.

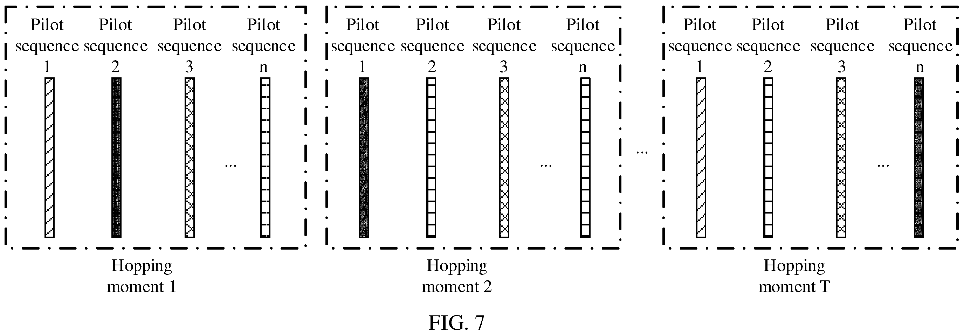

FIG. 7 is a schematic diagram of a scenario of a pilot hopping sequence according to an embodiment of this application. As shown in FIG. 7, a pilot sequence quantity L is n, and the n pilot sequences are a pilot sequence 1, a pilot sequence 2, a pilot sequence 3, ..., and a pilot sequence n respectively in FIG. 7. As shown in FIG. 7, at the hopping moment 1, the terminal device may send the pilot sequence 2; at the hopping moment 2, the terminal device may send the pilot sequence 1; ...; and at the hopping moment T, the terminal device may send the pilot sequence n.

In this embodiment of this application, users are jointly distinguished by using at least two resource dimensions of the frequency domain frequency hopping sequence, the DMRS port hopping sequence, the beam hopping sequence, the pilot hopping sequence, and the like, so that a user multiplexing capability of a system can be greatly improved, and interference between a plurality of users is reduced. In addition, a pilot pollution problem in a channel estimation process can be more effectively resolved, improving communication reliability.

It should be noted that, in this embodiment of this application, when the first hopping sequence is the DMRS port sequence, the users are jointly distinguished by using two resource dimensions: a frequency domain frequency and a DMRS port. A quantity of hopping patterns can be increased when a frequency domain bandwidth is limited, so that the user multiplexing capability of the system is improved. It is assumed that F is the optional frequency domain frequency quantity (or an optional frequency band quantity), and $P$ is the DMRS port quantity and different frequency-DMRS port combinations are considered. The optional total frequency quantity $Q = F \cdot P$. Therefore, a hopping sequence set that is G = {$s^1 s^2 ... s^K$} and that meet the following constraint condition may be designed:

$$D\left(s^i, s^j\right) = \left|\left\{t = [1, T] \middle| s_t^i = s_t^j\right\}\right| \leq d$$

The joint hopping sequence is s = [$s_1 s_2 ... s_T$], where $s_t$ E [1, Q]. Because $Q > F$, when the frequency domain bandwidth is limited, the two resource dimensions of the frequency domain frequency and the DMRS port are used at the same time to greatly increase a capacity of a hopping pattern in the system.

For example, a hopping pattern construction method based on the Euclidean geometry is considered. It is assumed that a frequency domain frequency quantity $F$ = 8, and a DMRS port quantity $P$ = 4. In this case, a capacity of a hopping pattern constructed in an existing solution is compared with a capacity of a hopping pattern constructed in a solution of this application in Table 7. It can be learned from Table 7 that, for the hopping pattern construction method based on the Euclidean geometry, under a condition that frequency domain resources are the same, a quantity of hopping patterns in the system may be greatly increased from $K$ = 64 to $K$ = 1024, and a maximum hopping period $T$ = 9 is increased to $T$ = 33 by further considering a resource dimension of the DMRS port. It should be noted that a hopping pattern capacity improvement method provided in the solution of this application is not only applicable to a hopping pattern construction solution based on the Euclidean geometry, but also applicable to a hopping pattern construction solution based on the interleaving and cyclic shift, and another possible hopping pattern construction solution.

**Table 7**

| | Optional total frequency quantity $Q = 2^{(m-1)s}$ | (m, s) | Hopping pattern quantity $K = 2^{ms}$ | Maximum hopping period $T_{max} =$ $(2^{ms} - 1)/(2^s - 1)$ |
|---|---|---|---|---|
| Existing solution | 8(F) | (2, 3) | 64 | 9 |
| Solution proposed in this application | 32 (F·P) | (2, 5) | 1024 | 33 |

It should be noted that in this application, communication resources such as the frequency domain frequency, the DMRS port, the transmit beam, and the pilot sequence are jointly allocated, so that the user multiplexing capability of the system can be improved, and the pilot pollution problem in channel estimation can be reduced.

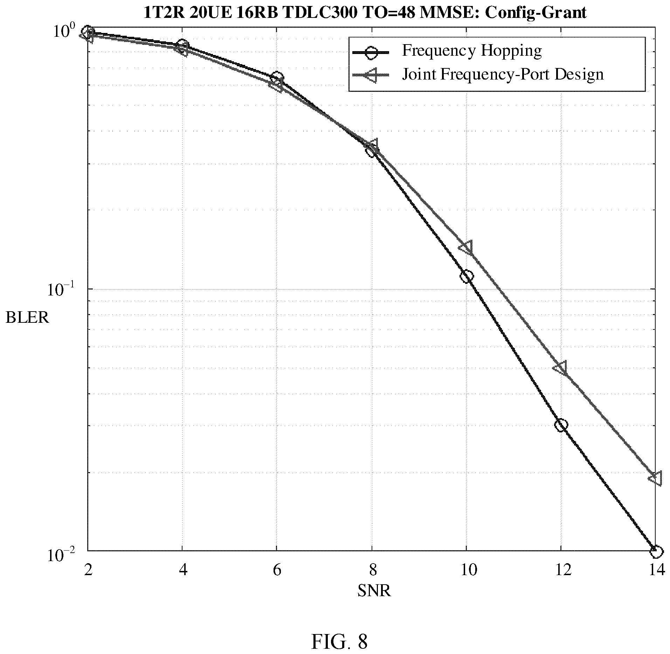

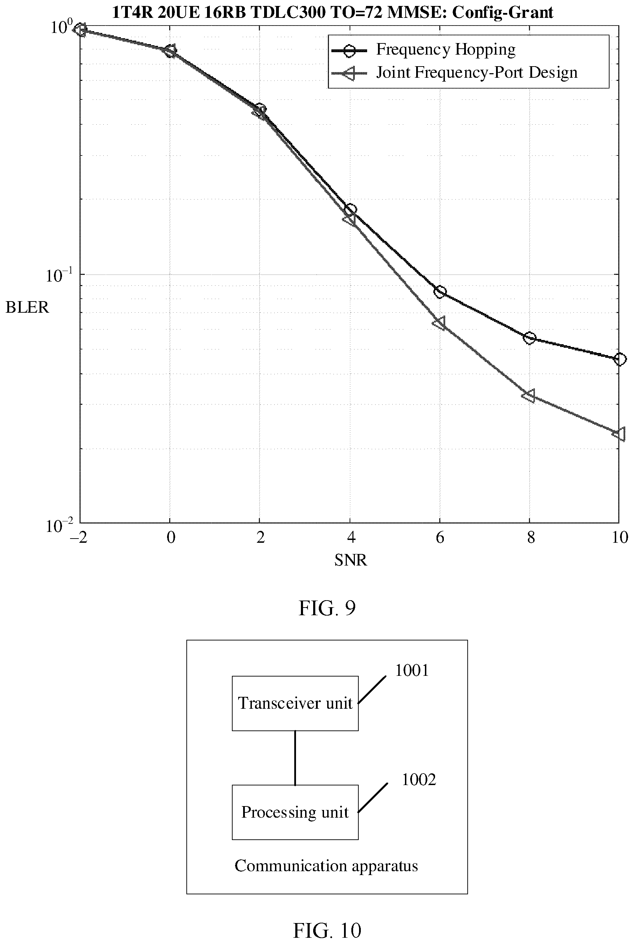

FIG. 8 and FIG. 9 show simulation performance of a block error rate (block error rate, BLER) of an actual channel estimation in a configured (pre-configured) scenario in the solution of this application. FIG. 8 corresponds to a scenario in which a potential user quantity is small and a time offset (time offset, TO) is small in a network (for ease of description, a case 1 is referred to as below). FIG. 9 corresponds to a scenario in which a potential user quantity is large and a time offset is large in a network (for ease of description, a case 2 is referred to as below). Frequency Hopping in FIG. 8 represents a frequency domain frequency hopping sequence set generated by using the Euclidean geometry method when the frequency domain frequency quantity F is equal to 8. The frequency domain frequency hopping sequence set includes a total of 64 frequency domain frequency hopping sequences, and the 64 frequency domain frequency hopping sequences may be used for simulation. Joint Frequency-Port Hopping in FIG. 8 represents a joint hopping pattern set generated by using the Euclidean geometry method when the total frequency quantity is equal to 32 (in other words, Q=32). There are a total of 1024 joint hopping patterns, and 64 joint hopping patterns may be selected from the 1024 joint hopping patterns for simulation. Frequency Hopping in FIG. 9 represents a frequency domain frequency hopping sequence set generated by using the European geometry method when the frequency domain frequency quantity *F* is equal to 8. The frequency domain frequency hopping sequence set includes a total of 64 frequency domain frequency hopping sequences, and the 64 frequency domain frequency hopping sequences may be repeated for three times to obtain a total of 192 frequency domain frequency hopping sequences for simulation. In FIG. 9, Joint Frequency-Port Hopping represents a joint hopping pattern set generated by using the European geometry method when the total frequency quantity is equal to 32. There are a total of 1024 joint hopping patterns, and 192 joint hopping patterns may be selected from the 1024 joint hopping patterns for simulation.

Table 8 shows simulation parameter configurations in the case 1 and the case 2.

**Table 8**

|  | Potential user quantity | Active user quantity | Frequency domain frequency quantity | DMRS port quantity | Time offset | Antenna setting |
|---|---|---|---|---|---|---|
| Case 1 | 64 | 20 | 8 | 4 | 48 | 1T2R |
| Case 2 | 192 | 20 | 8 | 4 | 72 | 1T4R |

For FIG. 8, when only the frequency domain frequency quantity F = 8 is considered, a maximum of the 64 hopping patterns can be generated. In this case, the potential access-user quantity is relatively small. In addition, the time offset TO=48 is relatively small, so that orthogonality of the pilot sequence is better. For the foregoing reasons, the existing solution is less affected by pilot pollution. Therefore, the existing solution has relatively good BLER performance.

For FIG. 9, to meet the potential user quantity K = 192, the generated hopping pattern needs to be reused for three times (192 = 3 × 64) in the existing solution. Therefore, frequencies and DMRS ports of two users collide at each hopping moment (that is, a quantity d of collision times=a quantity of hopping times T). In this case, because the time offset TO=72 is relatively large, so that orthogonality of the pilot sequence is relatively poor. In this way, channel estimation precision is relatively low. Therefore, the existing solution has relatively poor BLER performance. In comparison, a frequency-DMRS port joint allocation method proposed in the technical solution (that is, EG Hopping + Joint Design in FIG. 8 and FIG. 9) of this application may ensure that a frequency and a DMRS port collide at the same time at a maximum of one hopping moment. Therefore, the method has better BLER performance.

The following describes in detail communication apparatuses provided in this application with reference to FIG. 10 to FIG. 13.

FIG. 10 is a schematic diagram of a structure of a communication apparatus according to an embodiment of this application. The communication apparatus shown in FIG. 10 may be configured to perform some or all functions of the terminal device in the method embodiment described in FIG. 5. The apparatus may be a terminal device, an apparatus in a terminal device, or an apparatus that can be used together with a terminal device. The communication apparatus may alternatively be a chip system. The communication apparatus shown in FIG. 10 may include a transceiver unit 1001 and a processing unit 1002. The processing unit 1002 is configured to process data. The transceiver unit 1001 is integrated with a receiving unit and a sending unit. The transceiver unit 1001 may also be referred to as a communication unit. Alternatively, the transceiver unit 1001 may be split into a receiving unit and a sending unit. The processing unit 1002 and the transceiver unit 1001 in the following are similar. Details are not described in the following.

The transceiver unit 1001 is configured to receive indication information from a network device, where the indication information indicates a frequency domain frequency hopping sequence and a first hopping sequence, or the indication information indicates a joint hopping sequence, and the joint hopping sequence is used to determine a frequency domain frequency hopping sequence and a first hopping sequence, and the first hopping sequence includes one or more of the following: a demodulation reference signal DMRS port hopping sequence, a beam hopping sequence, and a pilot hopping sequence.

The processing unit 1002 is configured to communicate with the network device by using the transceiver unit 1001 based on the frequency domain frequency hopping sequence and the first hopping sequence.

In a possible implementation, the first hopping sequence is the DMRS port hopping sequence, and a hopping sequence indicated by the indication information is determined based on at least one of the following parameters: a frequency domain frequency quantity *F*, a DMRS port quantity *P*, a hopping sequence length *T*, and a maximum quantity of collision times *d*.

In a possible implementation, the indication information indicates the joint hopping sequence, and the processing unit 1002 is further configured to:

convert the joint hopping sequence into the frequency domain hopping sequence and the DMRS port hopping sequence based on the frequency domain frequency quantity *F*.

In a possible implementation, the joint hopping sequence is s = [s$_1$s$_2$ ... s$_T$]; and the frequency domain hopping sequence $s^q = [s_1^q s_2^q \dots s_T^q]$ and the DMRS port hopping sequence $s^p = [s_1^p s_2^p \dots s_T^p]$ respectively meet:

$$s_t^q = mod(s_t, F);$$

and

$$s_t^p = \text{ceil}(s_t/F)$$

$s_t^q$ represents frequency selection of the frequency domain hopping sequence at a moment t, $s_t^p$ is port selection of the DMRS port hopping sequence at the moment t, and t∈[1, T].

In a possible implementation, the indication information indicates the joint hopping sequence, and the processing unit 1002 is further configured to:
convert the joint hopping sequence into the frequency domain hopping sequence and the DMRS port hopping sequence based on the DMRS port quantity *P*.

In a possible implementation, the joint hopping sequence is s = [s$_1$s$_2$ ... s$_T$]; and the frequency domain hopping sequence $s^q = [s_1^q s_2^q \dots s_T^q]$ and the DMRS port hopping sequence $s^p = [s_1^p s_2^p \dots s_T^p]$ respectively meet:

$$s_t^q = \text{ceil}(s_t/P);$$

and

$$s_t^p = mod(s_t, P)$$

$s_t^q$ represents frequency selection of the frequency domain hopping sequence at a moment t, $s_t^p$ is port selection of the DMRS port hopping sequence at the moment t, and t∈[1, T].

In a possible implementation, the transceiver unit 1001 is further configured to:
receive radio resource control RRC signaling from the network device, where the RRC signaling includes the indication information.

In a possible implementation, the indication information includes one or more of the following:

the hopping sequence, a sequence identifier corresponding to the hopping sequence, and a signature sequence corresponding to the hopping sequence, where
a frequency band granularity of the signature sequence is a resource block level or a resource element level.

For another possible implementation of the communication apparatus, refer to related descriptions of functions of the access network device in the method embodiment corresponding to FIG. 5. Details are not described herein again.

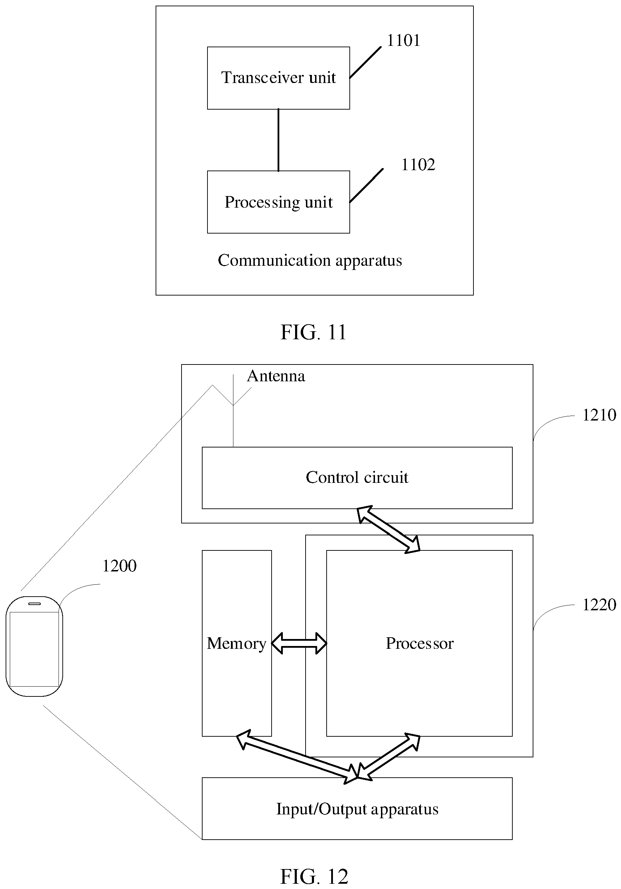

FIG. 11 is a schematic diagram of a structure of another communication apparatus according to an embodiment of this application. The communication apparatus shown in FIG. 11 may be configured to perform some or all functions of the network device in the method embodiment described in FIG. 5. The apparatus may be a network device, an apparatus in a network device, or an apparatus that can be used together with a network device. The communication apparatus may alternatively be a chip system. The communication apparatus shown in FIG. 11 includes a transceiver unit 1101 and a processing unit 1102.

The transceiver unit 1101 is configured to send indication information to a terminal device, where the indication information indicates a frequency domain frequency hopping sequence and a first hopping sequence, or the indication information indicates a joint hopping sequence, and the joint hopping sequence is used to determine a frequency domain frequency hopping sequence and a first hopping sequence; and the first hopping sequence includes one or more of the following: a demodulation reference signal DMRS port hopping sequence, a beam hopping sequence, and a pilot hopping sequence.

The processing unit 1102 is configured to communicate with the terminal device by using the transceiver unit 1101 based on the frequency domain frequency hopping sequence and the first hopping sequence.

In a possible implementation, the first hopping sequence is the DMRS port hopping sequence, and a hopping sequence indicated by the indication information is determined based on at least one of the following parameters: a frequency domain frequency quantity $F$, a DMRS port quantity $P$, a hopping sequence length $T$, and a maximum quantity of collision times $d$.

In a possible implementation, the frequency domain hopping sequence and the DMRS port hopping sequence are obtained through conversion based on the frequency domain frequency quantity $F$ and the joint hopping sequence.

In a possible implementation, the joint hopping sequence is s = [s₁s₂ ... s_T]; and the frequency domain hopping sequence $s^q = [s_1^q s_2^q \ldots s_T^q]$ and the DMRS port hopping sequence $s^p = [s_1^p s_2^p \ldots s_T^p]$ respectively meet:

$$s_t^q = mod(s_t, F);$$

and

$$s_t^p = \text{ceil}(s_t / F)$$

$s_t^q$ represents frequency selection of the frequency domain hopping sequence at a moment t, $s_t^p$ is port selection of the DMRS port hopping sequence at the moment t, and t∈[1, T].

In a possible implementation, the frequency domain hopping sequence and the DMRS port hopping sequence are obtained through conversion based on the DMRS port quantity $P$ and the joint hopping sequence.

In a possible implementation, the joint hopping sequence is s = [s₁s₂ ... s_T]; and the frequency domain hopping sequence $s^q = [s_1^q s_2^q \ldots s_T^q]$ and the DMRS port hopping sequence $s^p = [s_1^p s_2^p \ldots s_T^p]$ respectively meet:

$$s_t^q = \text{ceil}(s_t / P);$$

and

$$s_t^p = mod(s_t, P)$$

$s_t^q$ represents frequency selection of the frequency domain hopping sequence at a moment t, $s_t^p$ is port selection of the DMRS port hopping sequence at the moment t, and t∈[1, T].

In a possible implementation, the transceiver unit 1101 is further configured to:
send radio resource control RRC signaling to the terminal device, where the RRC signaling includes the indication information.

In a possible implementation, the indication information includes one or more of the following:

the hopping sequence, a sequence identifier corresponding to the hopping sequence, and a signature sequence corresponding to the hopping sequence, where
a frequency band granularity of the signature sequence is a resource block level or a resource element level.

For another possible implementation of the communication apparatus, refer to related descriptions of functions of the access network device in the method embodiment corresponding to FIG. 5. Details are not described herein again.

FIG. 12 is a schematic diagram of a structure of another communication apparatus according to an embodiment of this application. As shown in FIG. 12, the communication apparatus may be the terminal device described in embodiments of this application, and is configured to implement functions of the terminal device in FIG. 5. For ease of description, FIG. 12 shows only main components of a terminal device 1200. As shown in FIG. 12, the terminal device 1200 includes a processor, a memory, a control circuit, an antenna, and an input/output apparatus. The processor is mainly configured to: process a communication protocol and communication data, control the entire terminal device 1200, execute a software program, and process data of the software program. The memory is mainly configured to store a software program and data. The control circuit is mainly configured to perform conversion between a baseband signal and a radio frequency signal and process the radio frequency signal. The antenna is mainly configured to receive and send a radio frequency signal in an electromagnetic wave form. The input/output apparatus, for example, a touchscreen, a display, a microphone, or a keyboard, is mainly configured to receive data input by a user and output data to the user.

That the terminal device 1200 is a mobile phone is used as example. After the terminal device 1200 is powered on, the processor may read a software program in a storage unit, interpret and execute instructions of the software program, and process data of the software program. When data needs to be sent wirelessly, after performing baseband processing on the to-be-sent data, the processor outputs a baseband signal to the control circuit, and after performing radio frequency processing on the baseband signal, the control circuit sends a radio frequency signal in the electromagnetic wave form through the antenna. When data is sent to the terminal device 1200, the control circuit receives the radio frequency signal through the antenna, converts the radio frequency signal into the baseband signal, and outputs the baseband signal to the processor, and the processor converts the baseband signal into data and processes the data.

A person skilled in the art may understand that, for ease of description, FIG. 12 shows only one memory and one processor. In some embodiments, the terminal device 1200 may include a plurality of processors and memories. The memory may also be referred to as a storage medium, a storage device, or the like. This is not limited in this embodiment of the present invention.

In an optional implementation, the processor may include a baseband processor and a central processing unit. The baseband processor is mainly configured to process the communication protocol and the communication data. The central processing unit is mainly configured to control the entire terminal device 1200, execute the software program, and process the data of the software program. Functions of the baseband processor and the central processing unit are integrated into the processor in FIG. 12. A person skilled in the art may understand that the baseband processor and the central processing unit each may be an independent processor, and are interconnected by using a technology such as a bus. The terminal device 1200 may include a plurality of baseband processors to adapt to different network standards. The terminal device 1200 may include a plurality of central processing units to enhance a processing capability of the terminal device 1200. Components of the terminal device 1200 may be connected through various buses. The baseband processor may also be expressed as a baseband processing circuit or a baseband processing chip. The central processing unit may also be expressed as a central processing circuit or a central processing chip. A function of processing the communication protocol and communication data may be built in the processor; or may be stored in the storage unit in a form of a software program, and the processor executes the software program to implement a baseband processing function.

In an example, the antenna and the control circuit that have a transceiver function may be considered as a transceiver unit 1210 of the terminal device 1200, and the processor that has a processing function may be considered as a processing unit 1220 of the terminal device 1200. As shown in FIG. 12, the terminal device 1200 includes the transceiver unit 1210 and the processing unit 1220. The transceiver unit may also be referred to as a transceiver, a transceiver machine, a transceiver apparatus, or the like. Optionally, a component that is in the transceiver unit 1210 and that is configured to implement a receiving function may be considered as a receiving unit, and a component that is in the transceiver unit 1210 and that is configured to implement a sending function may be considered as a sending unit. In other words, the transceiver unit 1210 includes the receiving unit and the sending unit. For example, the receiving unit may also be referred to as a receiver machine, a receiver, a receiver circuit, or the like. The sending unit may be referred to as a transmitter machine, a transmitter, a transmitter circuit, or the like.

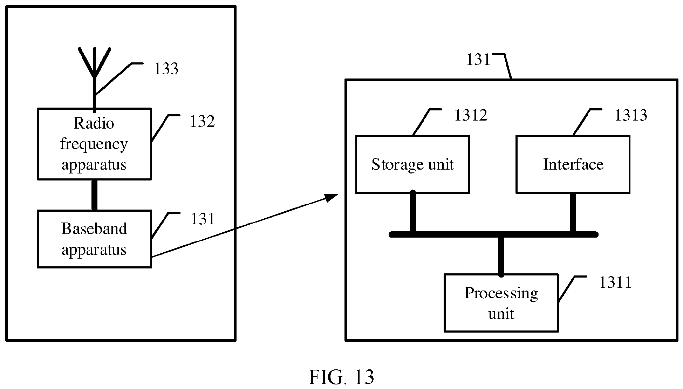

FIG. 13 is a schematic diagram of a structure of another communication apparatus according to an embodiment of this application. As shown in FIG. 13, the communication apparatus may be the network device described in embodiments of this application, and is configured to implement functions of the network device in FIG. 5. The network device includes a baseband apparatus 131, a radio frequency apparatus 132, and an antenna 133. In an uplink direction, the radio frequency apparatus 132 receives, through the antenna 133, information sent by the terminal device, and sends, to the baseband apparatus 131 for processing, the information sent by the terminal device. In a downlink direction, the baseband apparatus 131 processes the information of the terminal device, and sends the information to the radio frequency apparatus 132. The radio frequency apparatus 132 processes the information of the terminal device, and then sends processed information to the terminal device through the antenna 133.

The baseband apparatus 131 includes one or more processing units 1311, a storage unit 1312, and an interface 1313. The processing unit 1311 is configured to support the network device in performing functions of the network device in the foregoing method embodiments. The storage unit 1312 is configured to store a software program and/or data. The interface 1313 is configured to exchange information with the radio frequency apparatus 132, and the interface includes an interface circuit, configured to input and output information. In an implementation, the processing unit is an integrated circuit, for example, one or more ASIC, one or more DSPs, one or more FPGAs, or a combination of these integrated circuits. These integrated circuits may be integrated to form a chip. The storage unit 1312 and the processing unit 1311 may be located in a same chip, that is, on-chip storage elements. Alternatively, the storage unit 1312 and the processing unit 1311 may be located on a different chip from the processing unit 1311, that is, off-chip storage elements. The storage unit 1312 may be one memory, or may be a general term of a plurality of memories or storage elements.

The network device may implement some or all of the steps in the foregoing method embodiments by using one or more processing units to schedule a program, for example, implement the corresponding functions of the network device in FIG. 5. The one or more processing units may support a wireless access technology of a same standard, and may also support a wireless access technology of different standards.

An embodiment of this application further provides a computer-readable storage medium. The computer-readable storage medium stores instructions. When the instructions are run on a processor, method procedures in the foregoing method embodiments are implemented.

An embodiment of this application further provides a computer program product. When the computer program product is run on a processor, method procedures in the foregoing method embodiments are implemented.

A person of ordinary skill in the art may be aware that, with reference to the examples described in embodiments disclosed in this specification, units and steps may be implemented by electronic hardware or a combination of computer software and electronic hardware. Whether the functions are performed by a hardware or software manner depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiment is merely an example. For example, division into units is merely logical function division. Units described as separate components may or may not be physically separate, and components displayed as units may or may not be physical units, may be located in one position, or may be distributed on a plurality of network units. Some or all of the units may be selected according to an actual requirement, to achieve the objectives of the solutions of embodiments.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The computer-readable storage medium may be any usable medium that can be accessed by a computer. For example, the computer-readable medium may include but is not limited to: a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically erasable programmable read only memory, EEPROM), a compact disc read-only memory (compact disc read-only memory, CD-ROM), a universal serial bus flash disk (universal serial bus flash disk), a removable hard disk, another optical disc memory, a magnetic disk storage medium, another magnetic storage device, or any other medium that can be used to carry or store expected program code in a form of instructions or a data structure and that can be accessed by a computer. In addition, through illustrative but not limited descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

**Claims**

1.  A communication method, comprising:

receiving indication information from a network device, wherein the indication information indicates a frequency domain frequency hopping sequence and a first hopping sequence, or the indication information indicates a joint hopping sequence, and the joint hopping sequence is used to determine a frequency domain frequency hopping sequence and a first hopping sequence; and the first hopping sequence comprises one or more of the following: a demodulation reference signal DMRS port hopping sequence, a beam hopping sequence, and a pilot hopping sequence; and

communicating with the network device based on the frequency domain frequency hopping sequence and the first hopping sequence.

2. The method according to claim 1, wherein the first hopping sequence is the DMRS port hopping sequence; and a hopping sequence indicated by the indication information is determined based on at least one of the following parameters:

a frequency domain frequency quantity $F$, a DMRS port quantity $P$, a hopping sequence length $T$, and a maximum quantity of collision times $d$.

3. The method according to claim 2, wherein the indication information indicates the joint hopping sequence; and the method further comprises:

converting the joint hopping sequence into the frequency domain hopping sequence and the DMRS port hopping sequence based on the frequency domain frequency quantity $F$.

4. The method according to claim 3, wherein the joint hopping sequence is $s = [s_1 s_2 \dots s_T]$; and the frequency domain hopping sequence $s^q = [s_1^q s_2^q \dots s_T^q]$, and the DMRS port hopping sequence $s^p = [s_1^p s_2^p \dots s_T^p]$ respectively meet:

$$s_t^q = mod(s_t, F);$$

and

$$s_t^p = \text{ceil}(s_t/F),$$

wherein $s_t^q$ represents frequency selection of the frequency domain hopping sequence at a moment t, $s_t^p$ is port selection of the DMRS port hopping sequence at the moment t, and $t \in [1, T]$.

5. The method according to claim 2, wherein the indication information indicates the joint hopping sequence; and the method further comprises:

converting the joint hopping sequence into the frequency domain hopping sequence and the DMRS port hopping sequence based on the DMRS port quantity $P$.

6. The method according to claim 5, wherein the joint hopping sequence is $s = [s_1 s_2 \dots s_T]$; and the frequency domain hopping sequence $s^q = [s_1^q s_2^q \dots s_T^q]$ and the DMRS port hopping sequence $s^p = [s_1^p s_2^p \dots s_T^p]$ respectively meet:

$$s_t^q = \text{ceil}(s_t/P);$$

and

$$s_t^p = mod(s_t, P),$$

wherein $s_t^q$ represents frequency selection of the frequency domain hopping sequence at a moment t, $s_t^p$ is port selection of the DMRS port hopping sequence at the moment t, and tE[1, T].

7. The method according to any one of claims 1 to 6, wherein the receiving indication information from a network device comprises:
receiving radio resource control RRC signaling from the network device, wherein the RRC signaling comprises the indication information.

8. The method according to any one of claims 1 to 7, wherein the indication information comprises one or more of the following:

the hopping sequence, a sequence identifier corresponding to the hopping sequence, and a signature sequence corresponding to the hopping sequence, wherein
a frequency band granularity of the signature sequence is a resource block level or a resource element level.

9. A communication method, comprising:

sending indication information to a terminal device, wherein the indication information indicates a frequency domain frequency hopping sequence and a first hopping sequence, or the indication information indicates a joint hopping sequence, and the joint hopping sequence is used to determine a frequency domain frequency hopping sequence and a first hopping sequence; and the first hopping sequence comprises one or more of the following: a demodulation reference signal DMRS port hopping sequence, a beam hopping sequence, and a pilot hopping sequence; and
communicating with the terminal device based on the frequency domain frequency hopping sequence and the first hopping sequence.

10. The method according to claim 9, wherein the first hopping sequence is the DMRS port hopping sequence, and a hopping sequence indicated by the indication information is determined based on at least one of the following parameters:
a frequency domain frequency quantity $F$, a DMRS port quantity $P$, a hopping sequence length $T$, and a maximum quantity of collision times $d$.

11. The method according to claim 10, wherein the frequency domain hopping sequence and the DMRS port hopping sequence are obtained through conversion based on the frequency domain frequency quantity $F$ and the joint hopping sequence.

12. The method according to claim 11, wherein the joint hopping sequence is s = [$s_1 s_2 ... s_T$]; and the frequency domain hopping sequence $s^q = [s_1^q s_2^q ... s_T^q]$, and the DMRS port hopping sequence $s^p = [s_1^p s_2^p ... s_T^p]$ respectively meet:

$$s_t^q = mod(s_t, F);$$

and

$$s_t^p = ceil(s_t/F),$$

wherein $s_t^q$ represents frequency selection of the frequency domain hopping sequence at a moment t, $s_t^p$ is port selection of the DMRS port hopping sequence at the moment t, and tE[1, T].

13. The method according to claim 10, wherein the frequency domain hopping sequence and the DMRS port hopping sequence are obtained through conversion based on the DMRS port quantity $P$ and the joint hopping sequence.

14. The method according to claim 13, wherein the joint hopping sequence is s = [$s_1 s_2 \dots s_T$]; and the frequency domain hopping sequence $s^q = [s_1^q s_2^q \dots s_T^q]$, and the DMRS port hopping sequence $s^p = [s_1^p s_2^p \dots s_T^p]$ respectively meet:

$$s_t^q = \mathrm{ceil}(s_t/P);$$

and

$$s_t^p = mod(s_t, P),$$

wherein $s_t^q$ represents frequency selection of the frequency domain hopping sequence at a moment t, $s_t^p$ is port selection of the DMRS port hopping sequence at the moment t, and t∈[1, T].

15. The method according to any one of claims 9 to 14, wherein the sending indication information to a terminal device comprises:
sending radio resource control RRC signaling to the terminal device, wherein the RRC signaling comprises the indication information.

16. The method according to any one of claims 9 to 15, wherein the indication information comprises one or more of the following:

the hopping sequence, a sequence identifier corresponding to the hopping sequence, and a signature sequence corresponding to the hopping sequence, wherein
a frequency band granularity of the signature sequence is a resource block level or a resource element level.

17. A communication apparatus, wherein the communication apparatus is a terminal device or a chip, comprising:

a transceiver unit, configured to receive indication information from a network device, wherein the indication information indicates a frequency domain frequency hopping sequence and a first hopping sequence, or the indication information indicates a joint hopping sequence, and the joint hopping sequence is used to determine a frequency domain frequency hopping sequence and a first hopping sequence; and the first hopping sequence comprises one or more of the following: a demodulation reference signal DMRS port hopping sequence, a beam hopping sequence, and a pilot hopping sequence; and
a processing unit, configured to communicate with the network device by using the transceiver unit based on the frequency domain frequency hopping sequence and the first hopping sequence.

18. A communication apparatus, wherein the communication apparatus is a network device or a chip, comprising:

a transceiver unit, configured to send indication information to a terminal device, wherein the indication information indicates a frequency domain frequency hopping sequence and a first hopping sequence, or the indication information indicates a joint hopping sequence, and the joint hopping sequence is used to determine a frequency domain frequency hopping sequence and a first hopping sequence; and the first hopping sequence comprises one or more of the following: a demodulation reference signal DMRS port hopping sequence, a beam hopping sequence, and a pilot hopping sequence; and
a processing unit, configured to communicate with the terminal device by using the transceiver unit based on the frequency domain frequency hopping sequence and the first hopping sequence.

19. A communication apparatus, wherein the communication apparatus is a terminal device or a chip, comprising a processor and a transceiver, and the processor and the transceiver are configured to execute a computer program or instructions stored in at least one memory, to enable the apparatus to implement the method according to any one of claims 1 to 8.

20. A communication apparatus, wherein the communication apparatus is a network device or a chip, comprising a processor and a transceiver, and the processor and the transceiver are configured to execute a computer program or instructions stored in at least one memory, to enable the apparatus to implement the method according to any one of claims 9 to 16.

21. A computer-readable storage medium, wherein the storage medium stores a computer program or instructions, and when the computer program or the instructions are executed by a computer, the method according to any one of claims 1 to 8 is implemented.

22. A computer-readable storage medium, wherein the storage medium stores a computer program or instructions, and when the computer program or the instructions are executed by a computer, the method according to any one of claims 9 to 16 is implemented.

23. A computer program product, wherein the computer program product comprises computer program code, and when the computer program code is run on a computer, the method according to any one of claims 1 to 8 is implemented.

24. A computer program product, wherein the computer program product comprises computer program code, and when the computer program code is run on a computer, the method according to any one of claims 9 to 16 is implemented.

25. A communication system, comprising at least one network device and at least one terminal device, wherein the at least one terminal device is configured to implement the method according to any one of claims 1 to 8, and the at least one network device is configured to implement the method according to any one of claims 9 to 16.

FIG. 1

FIG. 2

EP 4 436 055 A1

PDSCH DMRS Config Type1

| 0 | 1 | 2 | 3 | 4 | 5 | 6 | 7 | 8 | 9 | 10 | 11 | 12 | 13 |
|---|---|---|---|---|---|---|---|---|---|----|----|----|----|

1002/1003

1000/1001

PDSCH DMRS Config Type1

| 0 | 1 | 2 | 3 | 4 | 5 | 6 | 7 | 8 | 9 | 10 | 11 | 12 | 13 |
|---|---|---|---|---|---|---|---|---|---|----|----|----|----|

1002/1003/
1006/1007

1000/1001/
1004/1005

FIG. 3

FIG. 4

| Access network device | | Terminal device |
|---|---|---|

S501: Receive indication
information from a network device

S502: Communicate with the
network device based on a
frequency domain frequency
hopping sequence and a first
hopping sequence

FIG. 5

Beam 1, Beam 2, Beam 3, Beam 4, Beam 5

Hopping moment 1

Beam 1, Beam 2, Beam 3, Beam 4, Beam 5

Hopping moment 2

Beam 1, Beam 2, Beam 3, Beam 4, Beam 5

Hopping moment T

FIG. 6

Pilot
sequence
1
Pilot
sequence
2
Pilot
sequence
3
Pilot
sequence
n

Pilot
sequence
1
Pilot
sequence
2
Pilot
sequence
3
Pilot
sequence
n

Pilot
sequence
1
Pilot
sequence
2
Pilot
sequence
3
Pilot
sequence
n

...

Hopping
moment 1

Hopping
moment 2

Hopping
moment T

FIG. 7

**1T2R 20UE 16RB TDLC300 TO=48 MMSE: Config-Grant**

FIG. 8

**1T4R 20UE 16RB TDLC300 TO=72 MMSE: Config-Grant**

FIG. 9

FIG. 10

Communication apparatus

FIG. 11

FIG. 12

FIG. 13

## INTERNATIONAL SEARCH REPORT

| International application No. |
| --- |
| **PCT/CN2022/129979** |

**A.    CLASSIFICATION OF SUBJECT MATTER**

H04B 7/04(2017.01)i;  H04W 72/12(2009.01)i

According to International Patent Classification (IPC) or to both national classification and IPC

**B.    FIELDS SEARCHED**

Minimum documentation searched (classification system followed by classification symbols)

H04W; H04L; H04B

Documentation searched other than minimum documentation to the extent that such documents are included in the fields searched

Electronic data base consulted during the international search (name of data base and, where practicable, search terms used)

WPI; EPODOC; CNPAT; CNKI; 3GPP: beam+, port+, random+, hop+, select+, chang+, frequency, pilot+, DMRS, combin+, joint+, 组合, 联合, 多维, 选择, 跳频, 跳变, 改变, 变化, 频点, 端口, 导频, 序列, 波束

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 106455097 A (ZHUHAI MEIZU TECHNOLOGY CO., LTD.) 22 February 2017 (2017-02-22)<br>    description, paragraphs [0057]-[0107] | 1-25 |
| Y | CN 106160815 A (NORTHWESTERN POLYTECHNIC UNIVERSITY) 23 November 2016 (2016-11-23)<br>    description, paragraphs [0041]-[0197], and claim 1 | 1-25 |
| A | US 2018149730 A1 (LI WENHUA et al.) 31 May 2018 (2018-05-31)<br>    entire document | 1-25 |
| A | WO 2021010872 A1 (TELEFONAKTIEBOLAGET LM ERICSSON (PUBL)) 21 January 2021 (2021-01-21)<br>    entire document | 1-25 |
| A | US 2015296052 A1 (RAYTHEON COMPANY) 15 October 2015 (2015-10-15)<br>    entire document | 1-25 |
| A | WO 2017008236 A1 (NEC CORPORATION et al.) 19 January 2017 (2017-01-19)<br>    entire document | 1-25 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **23 December 2022** | **18 January 2023** |

| Name and mailing address of the ISA/CN | Authorized officer |
| --- | --- |
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2022/129979** |

| Patent document cited in search report | | | Publication date (day/month/year) | Patent family member(s) | | | Publication date (day/month/year) |
| --- | --- | --- | --- | --- | --- | --- | --- |
| CN | 106455097 | A | 22 February 2017 | None | | | |
| CN | 106160815 | A | 23 November 2016 | None | | | |
| US | 2018149730 | A1 | 31 May 2018 | None | | | |
| WO | 2021010872 | A1 | 21 January 2021 | EP | 4000328 | A1 | 25 May 2022 |
| US | 2015296052 | A1 | 15 October 2015 | None | | | |
| WO | 2017008236 | A1 | 19 January 2017 | None | | | |

Form PCT/ISA/210 (patent family annex) (January 2015)

**EP 4 436 055 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111473385X